(19) Europäisches Patentamt
European Patent Office
Office européen des brevets

(11) **EP 2 948 276 B1**

(12) **EUROPEAN PATENT SPECIFICATION**

(45) Date of publication and mention
of the grant of the patent:
**20.12.2017 Bulletin 2017/51**

(51) Int Cl.:
***B25J 9/00*** *(2006.01)*

(21) Application number: **14730992.6**

(22) Date of filing: **27.01.2014**

(86) International application number:
**PCT/IB2014/058582**

(87) International publication number:
**WO 2014/125387 (21.08.2014 Gazette 2014/34)**

(54) **ROBOTIC DEVICE FOR ASSISTING HUMAN FORCE**

ROBOTER-VORRICHTUNG ZUR UNTERSTÜTZUNG MENSCHLICHE KRAFT

DISPOSITIF ROBOTIQUE POUR AIDER LA FORCE HUMAINE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.01.2013 IT PI20130005**

(43) Date of publication of application:
**02.12.2015 Bulletin 2015/49**

(73) Proprietor: **Scuola Superiore di Studi Universitari
e di Perfezionamento Sant'Anna
56127 Pisa (IT)**

(72) Inventors:
• **BERGAMASCO, Massimo
I-56010 Calci (PI) (IT)**
• **Filippeschi, Alessandro
I-56025 Pontedera (PI) (IT)**
• **Lenzo, Basilio
I-57025 Piombino (LI) (IT)**
• **Salsedo, Fabio
I-04100 Latina (IT)**

(74) Representative: **Celestino, Marco
ABM Agenzia Brevetti & Marchi,
Viale Giovanni Pisano, 31
56123 Pisa (IT)**

(56) References cited:
**EP-A1- 2 052 709      WO-A2-2012/042416
FR-A1- 2 541 574      US-B1- 8 152 699**

**Description**

Field of the invention

The present invention relates to devices that physically interact with a human (Physical Human-Device Interaction).

In particular, the invention relates to an actuation technique which uses both active elements and passive elements for generating a human-interaction force.

Description of the prior art

Devices are known that are suitable for physically interacting with a human, and that can be used, for instance, in the field of neuromotor rehabilitation of patients who suffered a bone or neurological trauma (Rehabilitation Robotics), for physically assisting elderly or disabled people during their everyday life (Assistive Robotics) or for reducing articular stresses that occur when handling objects in logistics and in production processes (Material Handling Robotics).

These devices consist of multi-joint mechanisms that are directly or indirectly connected to one or more points of a user's body, for example through a tool, in order to provide determined interaction forces that, for instance, can bear a load while moving it, or can assist the patient to carry out a rehabilitation movement.

In particular, so-called "weight-zero settlers" are known that reduce the weight of the tools used for manual operations in a production line, and robotic systems are also known that are used for neuromotor rehabilitation.

In their typical uses, these devices generate interaction forces that remain constant for relatively long time. These devices can be classified as active or passive devices, according to whether actuators are provided for generating the interaction forces. The advantages and the drawbacks of the two types of devices are described hereafter.

The active devices are very flexible to use, since they can generate interaction forces whose intensity and orientation can quickly change with time. An example of an active device interacting with a human is the lower limb exoskeleton described in CN102088933, in which actuators for a hip flexion movement generate a moment for assisting deambulation.

However, in order to generate the interaction forces, the active systems use actuators, such as electric motors, which are powered continuously, irrelevant from which operation the system is performing. This causes a high energy consumption and heavy and bulky accumulators/ generators are needed, which are hard to be incorporated in the device, as it would be desirable, instead, in an active orthosis, for example.

Moreover, the active systems require suitable sensors and sophisticated actuator control devices, so that they can generate a suitably precise human-interaction force. This solution is not inherently safe for the user, since the interaction force can become unstable, if the device controller is not robust enough to cope with the sudden changes of the dynamic parameters of a human and of the environment with which the device interacts.

On the contrary, the passive devices generate the interaction forces by passive elements, such as counterweight or resilient elements, so they require no energy whichever operation the device is performing, nor do they require sophisticated sensors and controls means, and are inherently safe, due to the passive nature of the actuation technique. Moreover, they can be used for a large number of applications in which the human-interaction forces remain unchanged for relatively long time.

For instance, FR2541574A1 or WO2012042416A2 describe passive systems for neuromotor rehabilitation that can generate a force that can at least partially compensate for the arm weight by a force that is the same for each arm position and for each robotic device position, by using suitable counterweights, which are selected according to the patient's size.

Devices also exist where resilient elements are provided, like the one described in R Barents, M Schenk, WD Van Dorsser, BM Wisse, JL Herder, (2011), " Spring-to-Spring Balancing as Energy-Free Adjustment Method in Gravity Equilibrators", ASME Journal of Mechanical Design, Volume 133, Issue 6, pp 061010.

This device uses a spring that works as an elastic energy reservoir, so that the total energy of the system, i.e. the sum of potential energy and of elastic energy, is always the same. The same article points out that resilient elements that can work as ideal springs, i.e. springs that have a zero rest length are suitable for this task. These springs can generate forces that depend upon their own length, instead of upon their lengthening/ shortening.

However, the passive devices require a manual operation for adjusting the interaction force and, accordingly, this adjustment cannot occur automatically, i.e. it cannot occur by a control system that evaluates the interaction force required by current operating conditions.

Moreover, the presently known techniques of passive balancing provide two different arrangements of the resilient elements on the various parts of the robotic device.

In the first arrangement, all the resilient elements are mounted to the part fixedly orientated with respect to the direction of the human-interaction force, i.e. on the frame of the robotic device.

In the second arrangement, the resilient elements are arranged at all the joints movable parts from which a moment must be generated for balancing the human-interaction force.

The first arrangement makes it possible to adjust the intensity of the interaction force by a single adjustment step, but it requires that enough room is available on the frame to house all the required resilient elements along with their adjustment mechanism. Therefore, the room available for housing the other subsystems that are required for operating the robotic device, such as the controller and the energy generation and storing system, which are normally housed within the fixed part of the device is insufficient.

The second arrangement reduces the room required to house the part of the actuation system that are arranged on the frame, but the force intensity cannot be adjusted by a single adjustment step. In fact, an adjustment step is required for each resilient element.

Moreover, to maintain the human-interaction force unchanged regardless of the position of the robotic device, these adjustment steps must be carried out taking into account well defined relative constraints.

A further drawback of the second arrangement is that an additional mechanism must be provided for adjusting the direction of the interaction force on each movable part, so that each resilient element can generate the suitable balancing moment. Finally, the inertia of the movable parts, in particular of the distal ones, is somewhat high due to the mass of the actuator, of the resilient elements and of their adjustment systems, which are arranged thereon.

An example of a passive apparatus comprising resilient elements arranged on the joint movable parts is shown in US8152699B1. In addition to the above mentioned drawbacks, which include the impossibility of automatically adjusting the human-interaction force, the fastening point of the resilient elements is moved, in order to adjust the above interaction force, by a slide device and an actuation device located on the frame. However, these adjusting systems are somewhat bulky. If a portable apparatus should be used, for instance, to assist a user's neuromotor rehabilitation during a relatively long time, e.g. during a whole day, these feature could be relevant: a portable apparatus would require accumulators to provide energetic autonomy to the apparatus itself. Due to the high weight of commercially available accumulators, the latter should be located on the frame, since the acceleration of the movable parts is significant, so the high inertia of the accumulators would tire the user. Therefore, the frame should be clearly free from bulky components, as far as this is possible, in order to provide enough room for receiving the accumulators.

Summary of the invention

It is therefore an object of the present invention to provide a robotic device for generating forces assisting or resisting the movement of the human body in which both active elements (actuators) and passive elements (resilient elements) are used, and for automatically adjusting, i.e. without any manual operation, the intensity of the human-interaction force, by a control system that evaluates the force intensity required on the basis of a suitable sensorial input and that operates the actuator or the actuators accordingly.

It is a further object of the present invention to provide such a robotic device for arranging all the resilient elements, the adjustment system and the relative actuators on the movable parts, in order to minimize the encumbrance of the actuation system on the frame. This way, a portable robotic device, which requires bulky accumulators for extending the range of the batteries energy, has space enough for receiving the accumulators same in the frame, where the relative inertial operations are less, reducing the stresses for a user during the motion.

It is also an object of the present invention to provide such a robotic device for arranging all the resilient elements, the adjustment system and the relative actuators on the movable part more proximal to the frame, in order to minimize the inertia of the movable parts distal.

It is another object of the present invention to provide such a robotic device for adjusting the interaction force even using a single actuator.

These and other objects are achieved by a robotic device for generating forces assisting or resisting the movement of the human body, comprising:

- a frame having a fixed point A and an articulation point O, integral to the frame, said fixed point A arranged at a predetermined distance $a_1$ with respect to the point O;
- a proximal arm, pivotally connected to the frame at the articulation point O, said proximal arm having a loading point O' arranged at a predetermined distance $l_1$ from the articulation point O along a proximal axis, the proximal axis having a predetermined direction x and arranged to rotate by a first rotation of a predetermined amplitude $\theta_1$, this first rotation of a predetermined amplitude $\theta_1$ lying in a plane $\pi$ containing the fixed point A and the proximal axis, wherein the first predetermined amplitude $\theta_1$ is zero when the predetermined direction x coincides with a predetermined direction y passing through the fixed point A and through articulation point O;
- a elongated resilient proximal element that has a predetermined stiffness $k_1$, constrained to proximal arm and to the frame, in order to generate an interaction moment $M_{in1}$ with respect to the articulation point O, the interaction moment $M_{in1}$ acting on said proximal arm and configured to generate an interaction force $F_{in1}$ on the proximal arm parallel to the direction y and applied to the loading point O', the interaction force $F_{in1}$ correlated to the interaction moment $M_{in1}$ according to the equation $F_{in1}*l_1*\sin\theta_1 = M_{in1}$; and further comprising:

- a carriage means comprising a carriage, the carriage slidingly arranged on the proximal arm and having a first balancing point B arranged on the proximal axis, this first balancing point B arranged at a predetermined balancing distance b1 from the articulation point O, this carriage arranged to travel along the proximal axis;
- an adjustment means that is arranged to automatically actuate the carriage means along the proximal axis, said adjustment means configured to adjust the balancing distance $b_1$;
- and wherein the interaction moment $M_{in1}$ is correlated to the balancing distance $b_1$ according to the equation $k_1*a_1*b_1*\sin\theta_1 = M_{in1}$, in such a way that the interaction force $F_{in1}$ is correlated to the balancing distance $b_1$ according to the equation $F_{in1} = k_1*a_1*b_1/l_1$, for any value of $\theta_1$.

This way, for example, if $k_1$, a1 and $l_1$ are assumed to be constant, it the interaction force $F_{in1}$ can be adjusted by changing proportionally the balancing distance $b_1$, by means of the adjustment means.

Therefore, the adjustment means can allow balancing an external force $F_{ext1}$, that has the same value and is opposite to the balancing force $F_{eq1}$, by changing the balancing distance $b_1$ in such a way that the equation $F_{ext1}*l_1=k_1*a_1*b_1$ is true. According to this equation, in fact, said robotic device is statically balanced for any value of $\theta_1$.

Advantageously, the adjustment means comprises:

- an actuator, in particular a motor, integral to the proximal arm, arranged to actuate the carriage in order to change the balancing distance $b_1$;
- a control unit arranged to receive input data, to analyse these input data and to operate the actuator in order to adjust the balancing distance $b_1$ on the basis of these input data.

Since the carriage, the actuator and the control unit are arranged on the proximal arm, instead of the frame, as it occurs in the prior art apparatuses, the advantage arises of clearing space on the frame itself. This way, a portable robotic device, which requires bulky accumulators for extending the range of the batteries energy, has enough space to receive the accumulators themselves in the frame, where the relative inertial forces are weaker, which reduces the efforts a user must do during the movement.

The input data received from the control unit can simply be imparted by an external adjustment carried out by a user, or they can be data, for example provided by sensors, depending upon the intensity of the interaction force $F_{in1}$. In the second case, the adjustment means can automatically change the balancing distance $b_1$ under the supervision of the control unit, which causes the actuator to cope in real time with the various different interaction force intensities $Fin_1$ that ate required.

Advantageously, the elongated resilient proximal element is constrained to a plurality of guide elements configured for guiding the elongated resilient proximal element according to a predetermined routing.

In particular, at least one guide element of the plurality is a pulley provided with a groove and hinged about a rotation axis substantially orthogonal to plane n, the elongated resilient proximal element constrained to the above described groove.

Advantageously, the plurality of guide elements comprises:

- a first pulley having a predetermined groove radius R, this first pulley hinged, with possibility of rotation with respect to the carriage, about an axis r passing through the fixed point A and orthogonal to plane n;
- a second pulley having said predetermined groove radius R, the second pulley hinged without possibility of rotation about an axis s passing through the first balancing point B and orthogonal to plane $\pi$;
- a third pulley having said predetermined groove radius R, the third pulley rotatably hinged about an axis t passing through the articulation point O and orthogonal to plane $\pi$;

In particular, the elongated resilient proximal element has a first end constrained to the second pulley at the groove and a second end constrained to proximal arm at a first proximal fastening point D.

Furthermore, the elongated resilient proximal element comprises an inextensible portion and a spring, connected to each other in series. This inextensible portion is arranged to be wound about the first pulley, about the second pulley and about the third pulley, in such a way that the action of the elongated resilient proximal element is the same as the action of an ideal spring, i.e. of a spring that has a zero rest length, which has an end connected to the fixed point A and to the first balancing point B.

This way, an elastic force $F_{el1}$ can be generated between the points A and B that is really directly proportional to segment AB and that has a proportionality coefficient equal to the stiffness $k_1$ of the spring.

As an alternative, the plurality of guide elements can comprise:

- a first pulley having a predetermined groove radius R, the first pulley rotatably hinged about an axis r passing through the fixed point A and orthogonal to plane n;
- a second pulley having said predetermined groove radius R, the second pulley hinged, without possibility of rotation with respect to the carriage, about an axis s passing through first balancing point B and orthogonal to plane $\pi$;
- a fourth pulley having said predetermined groove radius R, the fourth pulley rotatably hinged about an axis s passing through first balancing point B and orthogonal to plane n.

In particular, the elongated resilient proximal element has a first end constrained to the second pulley at the groove and a second end constrained to the carriage at a second proximal fastening point E.

Furthermore, the elongated resilient proximal element comprises an inextensible portion and a spring, connected to each other in series. Such inextensible portion is arranged to be wound about the first pulley, about the second pulley and about the fourth pulley, in such a way that the action of the elongated resilient proximal element is the same as the action of an ideal spring, i.e. of a spring that has a zero rest length, which has an end connected to the fixed point A and to the first balancing point B, in particular said ideal spring having a stiffness k such that $k = 4*k_1$.

The advantage with respect to the above described exemplary embodiment is that, with a same value of the parameters $a_1$, $b_1$ and $k_1$, an interaction force $F_{in1}$ can be obtained that is four time stronger. This allows using a spring that has a lower stiffness $k_1$ and/or reducing the size of the system to a minimum, by reducing $a_1$ and/or $b_1$.

Advantageously, the above described plurality of guide elements may also comprise a fifth pulley rotatably hinged about an axis p passing through a proximal winding point C of the carriage and orthogonal to plane $\pi$.

This way, by winding the inextensible portion also about the fifth pulley, the spring can be suitably positioned, i.e. in a way interfering with said carriage means and said adjustment means.

In particular, the adjustment means comprises an adjustment screw arranged to be brought into rotation by the actuator for actuating the carriage along the proximal axis.

Advantageously, the robotic device also comprises:

- a distal arm pivotally connected to proximal arm at loading point O', the distal arm having a second loading point O" arranged at a predetermined distance $l_2$ from the loading point O' along a distal axis, the distal axis having a predetermined direction z and arranged for carrying out a second rotation of a predetermined amplitude $\theta_2$, the second rotation of a predetermined amplitude $\theta_2$ lying in a plane parallel to plane $\pi$, where the second predetermined amplitude $\theta_2$ is zero when the predetermined direction z coincides with the predetermined direction y;
- a balancing lever pivotally connected to the frame at the articulation point O, the balancing lever having a second balancing point B' and having a balancing axis that has a predetermined direction w, the balancing axis passing through articulation point O and for second balancing point B', the second balancing point B' arranged at a predetermined distance $b_2$ from the articulation point O;
- a transmission mechanism arranged to actuate the balancing lever in such a way that the balancing axis can carry out a rotation of amplitude $\theta_2$ with respect to the proximal axis;
- an elongated resilient distal element that has a predetermined stiffness $k_2$, constrained to the proximal arm, to the frame and to the balancing lever, in order to generate an interaction moment $M_{in2}$ with respect to the loading point O', the interaction moment $M_{in2}$ acting on the distal arm and configured to generate an interaction force $F_{in2}$ on the distal arm parallel to the direction y and applied to the second loading point O", the interaction force $F_{in2}$ correlated to the interaction moment $M_{in2}$ according to the equation $F_{in2}*l_2*\sin\theta_2 = M_{in2}$.

In particular, the interaction moment $M_{in2}$ is correlated to the balancing distance $b_1$ according to the equation $k_2*b_2*b_1*\sin\theta_2 = M_{in2}$, in such a way that the interaction force $F_{in2}$ is correlated to the balancing distance $b_1$ according to the equation $F_{in2} = k_2*b_2*b_1/l_2$ for any value of $\theta_2$.

This way, by considering that the balancing distance $b_1$ is changed responsive to the force $F_{in1}$ that has to be generated on the proximal arm, the parameters $k_2$, $b_2$ and $l_2$ can be selected preliminarily, in order to obtain the predetermined ratio $F_{in1}/F_{in2}$.

Such system makes it possible to use a single carriage, a single actuator and a single adjustment screw for both the arms, which reduces the weight and increases its effectiveness.

Furthermore, since an actuator, a carriage and an adjustment screw must not be provided on the distal arm, the user must provide a lower inertial contribution when handling the distal arm, which reduces the loads for the user.

In particular, the plurality of guide elements comprises:

- a sixth pulley having a predetermined groove radius R, the sixth pulley rotatably hinged about an axis u passing through the second balancing point B' and orthogonal to plane $\pi$;

- a seventh pulley having said predetermined groove radius R, the seventh pulley hinged, without possibility of rotation with respect to the carriage, about an axis s passing through first balancing point B and orthogonal to plane $\pi$;
- an eighth pulley having said predetermined groove radius R, the eighth pulley rotatably hinged about an axis t passing through the articulation point O and orthogonal to plane $\pi$;

In particular, the elongated resilient distal element has a first end constrained to the seventh pulley at the groove and a second end constrained to proximal arm at a first distal fastening point D'.

Furthermore, the elongated resilient distal element comprises an inextensible portion and a spring, connected to each other in series. Such inextensible portion is arranged to be wound about the sixth pulley, about the seventh pulley and about the eighth pulley, in such a way that the action of the elongated resilient distal element is the same as the action of an ideal spring, i.e. of a spring that has a zero rest length, which has an end connected to the second balancing point B' and to first balancing point B.

This way, an elastic force $F_{el2}$ can be generated between points B' and B that is really directly proportional to the length of the segment B'B and that has a proportionality coefficient equal to the stiffness $k_2$ of the spring.

As an alternative, the plurality of guide elements can comprise:

- a sixth pulley having a predetermined groove radius R, the sixth pulley rotatably hinged about an axis r passing through the fixed point A and orthogonal to plane $\pi$;
- a seventh pulley having said predetermined groove radius R, the seventh pulley hinged, without possibility of rotation with respect to the carriage, about an axis s passing through the first balancing point B and orthogonal to the plane $\pi$;
- a ninth pulley having said predetermined groove radius R, the ninth pulley rotatably hinged about an axis s passing through the first balancing point B and orthogonal to the plane $\pi$;

In particular, the elongated resilient distal element has a first end constrained to the seventh pulley at the groove and has a second end constrained to the carriage at a second distal fastening point E'.

Furthermore, the elongated resilient proximal element comprises an inextensible portion and a spring, connected to each other in series. This inextensible portion is arranged to be wound about the sixth pulley, about the seventh pulley and about ninth pulley, so that the action of the elongated resilient distal element is equivalent to the action of an ideal spring, i.e. of a spring that has a zero rest length, which has an end connected to the second balancing point B' and to first balancing point B, in particular said ideal spring having a stiffness k such that $k = 4*k_2$.

The advantage with respect to the above described exemplary embodiment is that, with a same value of the parameters $b_1$, $b_2$ and $k_2$, an interaction force $F_{in2}$ can be obtained that is four times stronger. This allows using a spring that has a lower stiffness $k_2$ and to reduce the size of the system to a minimum, by reducing $b_1$ and/or $b_2$.

Advantageously, the above described plurality of guide elements may also comprise a tenth pulley rotatably hinged about an axis q that passes through a distal winding point C' of the carriage and that is orthogonal to plane n.

This way, by winding the inextensible portion also about the tenth pulley, the spring can be positioned suitably, i.e. in such a way that it does not interfere with said carriage means and said adjustment means.

Advantageously, the transmission mechanism comprises:

- a four-bar linkage arranged to transmit, upstream of the proximal arm, an information concerning an angular amplitude $\delta$ that is responsive to the angular amplitude $\theta_2$;
- a decoding mechanism arranged to receive the above described information concerning angular amplitude $\delta$, and to actuate the balancing lever in such a way that the balancing axis can carry out a rotation of amplitude $\theta_2$, with respect to the proximal axis.

Advantageously, the carriage means can also comprise an auxiliary carriage slidingly arranged on the proximal arm, the auxiliary carriage having a third balancing point B" arranged on the proximal axis, the third balancing point B" located at a predetermined second balancing distance $a_2$ from the articulation point O, the auxiliary carriage arranged to move along the proximal axis, in order to adjust the second balancing distance $a_2$. In particular the adjustment means can also comprise:

- an auxiliary actuator, in particular a motor, integral to the proximal arm, arranged to actuate the auxiliary carriage for adjusting the second balancing distance $a_2$;
- an auxiliary adjustment screw arranged to be brought into rotation by the auxiliary actuator for actuating the auxiliary carriage along the proximal axis.

In this case, the interaction moment $M_{in2}$ is correlated to the second balancing distance $a_2$ according to the equation $k_2*b_2*a_2*\sin\theta_2 = M_{in2}$, so that the interaction force $F_{in2}$ is correlated to the second balancing distance $a_2$

according to the equation $F_{in2} = k_2 {}^* b_2 {}^* a_2 / l_2$ for any value of $\theta_2$.

Also in this case, since the auxiliary carriage, the auxiliary actuator and the auxiliary adjustment screw can be arranged on the proximal arm, the user must bear a lower inertial contribution when handling the distal arm itself, which reduces the loads for the user.

Advantageously, at least one adjustment screw among the above adjustment screw and the auxiliary adjustment screw is a ball screw having a rotation axis v parallel to the direction x, the ball screw, comprising an inner core and a nut, the inner core integral to the carriage means and arranged to translate along rotation axis v, in consequence of a rotation of the nut about its rotation axis v.

Advantageously, at least one actuator among said actuator and the auxiliary actuator comprises a stator, integral to the proximal arm, and a rotor, integral to the nut and arranged to rotate about the rotation axis v, thus bringing into rotation also the nut.

This way, a rotation of the rotor about its rotation axis v causes the inner core to translate along rotation axis v and therefore causes the carriage means to translate along the proximal axis.

In particular, at least one actuator among the above actuator and the auxiliary actuator comprises an electromechanical brake that is arranged to move from a locked configuration, in which the electromechanical brake is not powered and the actuator, and/or the auxiliary actuator, cannot actuate the carriage means, to an unlocked configuration, in which the electromechanical brake is powered and the actuator, and/or the auxiliary actuator, can rotate thus moving the adjustment screw, and/or the auxiliary adjustment screw of the adjustment means.

This way, the system does not consume any energy, as long as the forces $F_{in1}$ and $F_{in2}$ are kept constant.

According to an other aspect of the invention, an exoskeleton structure for assistance to handling at least one human limb, such as an arm or a leg, comprises at least one robotic device for assistance to the human force as described above.

Brief description of the drawings

Further characteristics and/or the advantages of the robotic device for assistance to the human force, according to the present invention, will be made clearer with of the following description of an exemplary embodiment thereof, exemplifying but not limitative, with reference to the attached drawings in which:

- Fig. 1A shows an exemplary embodiment, according to the invention, of the robotic device for generating forces assisting or resisting the movement of the human body, showing the mechanism configured to generate an interaction force on the proximal arm;
- Fig. 1B shows a geometric diagram of the forces acting on the system;
- Fig. 1C shows a cross sectional view of an exemplary embodiment of the adjustment means;
- Fig. 2 shows an alternative of an exemplary embodiment of the robotic device of Fig. 1;
- Fig. 3 shows and the alternative of the exemplary embodiment of the robotic device of Fig. 1;
- Fig. 3A shows a diagrammatical elevational side view of the exemplary embodiment of Fig. 3, according to line PP of Fig. 3;
- Fig. 4 shows a possible exemplary embodiment, according to the invention, of the mechanism configured to generate an interaction force on the distal arm;
- Fig. 5 shows another exemplary embodiment of the robotic device of Fig. 4;
- Fig. 6 shows a further exemplary embodiment of the robotic device of Fig. 4;
- Fig. 6A shows a diagrammatical elevational side view of the exemplary embodiment of Fig. 6, according to line P'P' of Fig. 6;
- Fig. 7 shows another possible exemplary embodiment, according to the invention, of the mechanism configured to generate an interaction force on the distal arm;
- Fig. 8 shows a further exemplary embodiment of the robotic device of Fig. 6;
- Fig. 9 shows another exemplary embodiment of the robotic device of Fig. 4, in which an auxiliary carriage is provided;
- Fig. 10 shows an exemplary embodiment of an exoskeleton structure, according to the invention, comprising at least one robotic device.

Description of a preferred exemplary embodiment

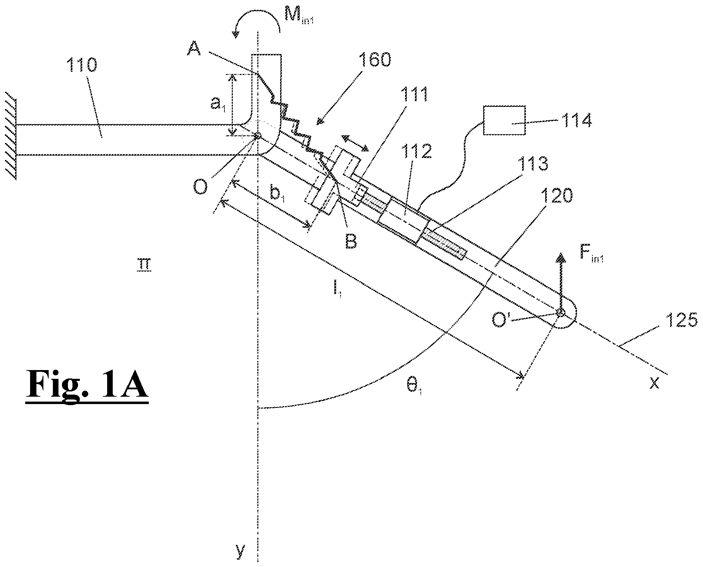

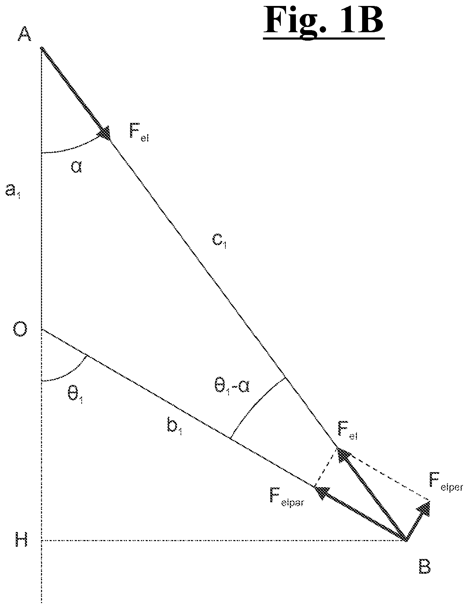

With reference to Figs. 1A and 1B, a robotic device 100 for generating forces assisting or resisting the movements of the human body comprises a frame 110 and a proximal arm 120.

Frame 110 has a fixed point A and an articulation point O located at a mutual distance $a_1$ along a predetermined direction y.

Proximal arm 120 is pivotally connected to the frame at articulation point O, and has a loading point 0' arranged at a predetermined distance $l_1$ from articulation point O.

Integrally to proximal arm 120, there is a proximal axis 125, which passes through points O and O', and which has a predetermined direction x.

Therefore, due to the pivotal constraint in O, proximal axis 125 can carry out a rotation of a predetermined amplitude $\theta_1$. Such rotation of amplitude $\theta_1$ lays in a plane $\pi$, containing fixed point A and proximal axis 125 itself. Amplitude $\theta_1$ is defined zero when direction x coincides with direction y, and increases when proximal axis 125 rotates counterclockwise.

Robotic device 100 also comprises a carriage 111 constrained to proximal arm 120, so that it can translate with respect to it along direction x.

A balancing point B is defined as a point arranged on proximal axis 125, integral to carriage 111, and arranged at a predetermined balancing distance $b_1$ from articulation point O. By translating carriage 111 along proximal axis 125, an adjustment of this balancing distance $b_1$ is therefore allowed.

Fixed point A and balancing point B are connected to the ends of an elongated resilient proximal element 160 that has a predetermined stiffness $k_1$ and that is configured to generate an elastic force $F_{el}$ along the direction passing through points A and B.

Elastic force $F_{el}$ is the product of stiffness $k_1$ and of the length $c_1$ of segment AB. As known, this corresponds to provide an ideal spring, i.e. a spring that has a zero rest length, between points A and B.

Elastic force $F_{el}$ causes an interaction moment $M_{in1}$ on proximal arm 120 with respect to articulation point O. Such moment depends upon the $F_{el}$ component orthogonal to the segment OB of length $b_1$. If this component is indicated as $F_{elper}$, the interaction moment $M_{in1}$ is given by equation:

$$M_{in1} = b_1 * F_{elper} = b_1 * F_{el} * \sin\alpha - \theta_1 =$$
$$b_1 * k_1 * c_1 * [\cos\alpha * \sin\theta_1 - \cos\theta_1 * \sin\alpha]$$

where $\alpha$ is the angle between segments OA and AB.

With reference to Fig. 1B, the following geometric relationships can be obtained:

$$\sin\alpha = [b_1 * \sin\theta_1] / c_1$$

$$\cos\alpha = [b_1 * \cos\theta_1 + a_1] / c_1$$

Hence:

$$M_{in1} = a_1 * b_1 * k_1 * \sin\theta_1$$

The interaction moment $M_{in1}$ generates in turn an interaction force $F_{in1}$ acting on proximal arm 120 itself, applied on loading point O' and parallel to direction y.

This interaction force $F_{in1}$, as it can be understood through simple mechanical consideration, is related to interaction $M_{in1}$, according to the equation:

$$F_{in1} * l_1 * \sin\theta_1 = M_{in1}.$$

Comparing the two previous equations, the following equation is obtained:

$$F_{in1} * l_1 = a_1 * b_1 * k_1$$

In other words, elongated resilient proximal element 160, whose ends are connected to points A and B, generates an interaction force $F_{in1}$ that is applied in O', is parallel to direction y and has a modular portion:

$$F_{in1} = a_1 * b_1 * k_1 / l_1$$

This equation is independent from the selected amplitude value $\theta_1$, whereby, by changing any of the parameters on the right side of the equation, generated force $F_{in1}$ can be adjusted.

In particular, if parameters $a_1$, $k_1$ and $l_1$ are assumed to be constant, $F_{in1}$ can be adjusted by changing balancing distance $b_1$, thus causing carriage 111 to translate along direction x.

With reference to Fig. 1A, robotic device 100 is also provided with an actuator 112 integral to proximal arm 120, with an adjustment screw 113 and with a control unit 114.

Actuator 112 can actuate adjustment screw 113 in such a way that the latter causes carriage 111 to translate along direction x.

Control unit 114, which is connected electrically or wireless with actuator 112, is configured to receive input data, to analyse these data and to operate actuator 112 accordingly.

This way, control unit 114 can drive balancing distance $b_1$ and therefore force $F_{in1}$ automatically and responsive to such input data.

For instance, if the robotic device aims at balancing an external force $F_{ext1}$ that is applied on loading point O' and is parallel to direction y, control unit 114, by knowing the value of force $F_{ext1}$, can actuate actuator 112 in such a way that the equation:

$$F_{ext1} = a_1 * b_1 * k_1 / l_1$$

is true. This way, the system is statically balanced regardless of value of $\theta_1$.

In particular, if external force $F_{ext1}$ is an adjustable force, control unit 114 can receive, as an input from sensors, such as dynamometers or the like, the value of force $F_{ext1}$ and can adjust balancing distance $b_1$, so that the above equation is substantially real time true.

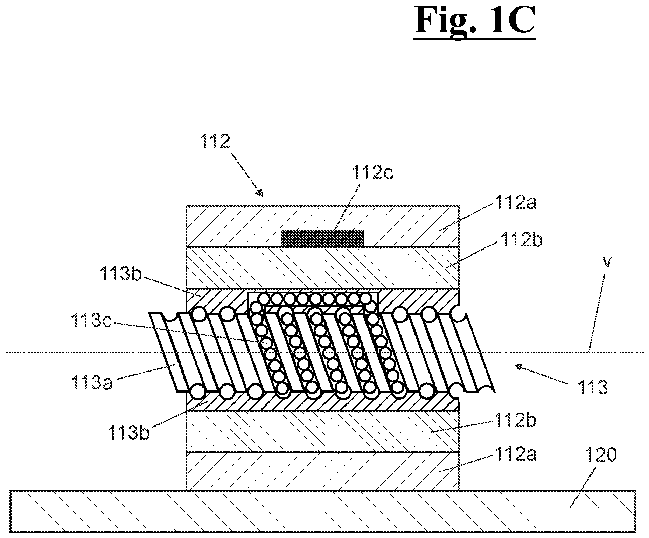

With reference to Fig. 1C, a possible exemplary embodiment of robotic device 100 provides that adjustment screw 113 is a ball screw and that actuator 112 is an electric motor.

In particular, ball screw 113 comprises an inner core 113a and a nut 113b, while electric motor 112 comprises a stator 112a and a rotor 112b.

Stator 112a is integral to proximal arm 120 and houses rotor 112b. The latter is adapted to rotate wit respect to stator 112a about a rotation axis v. Rotor 112b is integral to nut 113a and therefore causes the latter to rotate, therefore balls 113c turn the rotational movement of nut 113b into a translational movement of inner core 113a along rotation axis v. Finally, since inner core 113a is integral to carriage 111, not shown in Fig. 1C for simplicity, the translation of inner core 113a causes a subsequent translation of carriage 111 and a change of balancing distance $b_1$.

In this exemplary embodiment, actuator 112 also comprises an electromechanical brake 112c that is arranged to change from a locked configuration, in which electromechanical brake 112c is not powered and actuator 112 cannot actuate carriage 111, to an unlocked configuration, in which electromechanical brake 112c is powered and actuator 112 is adapted to rotate, thus moving adjustment screw 113.

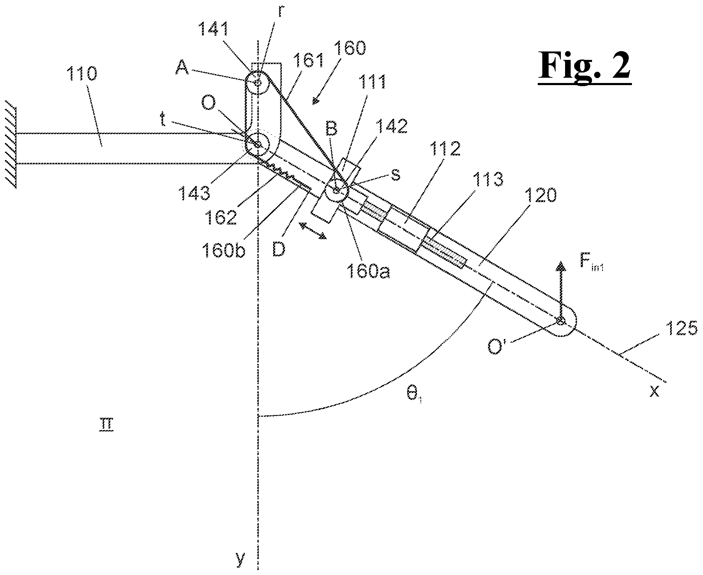

With reference to Fig. 2, a variant of an exemplary embodiment of robotic device 110 of Fig. 1 comprises:

- a first pulley 141 rotatably hinged about an axis r passing through fixed point A and orthogonal to plane $\pi$;
- a second pulley 142 rotatably hinged about an axis s passing through first balancing point B and orthogonal to plane $\pi$;
- a third pulley 143 rotatably hinged about an axis t passing through articulation point O and orthogonal to plane $\pi$;

Pulleys 141, 142, 143 have all the same groove radius R.

In this exemplary embodiment, elongated resilient proximal element 160 has a first end 160a constrained to the groove of second pulley 142 and a second end 160b constrained to proximal arm 120 at a first proximal fastening point D.

Furthermore, elongated resilient proximal element 160 comprises an inextensible portion 161, in particular a cable, that is serially connected to a spring 162. Cable 161 is arranged to be wound about first pulley 141, about second pulley 142 and about third pulley 143, in such a way that the action of elongated resilient proximal element 160 is like an ideal spring, i.e. a spring that has a zero rest length, which has an end connected to fixed point A and to first balancing point B.

This way, even if an ideal or substantially ideal spring is not used, the value of elastic force $F_{el1}$ generated by resilient element 160 can be equal to the product of the elastic constant $k_1$ and of the length of segment AB, even if the rest length of the spring is not zero.

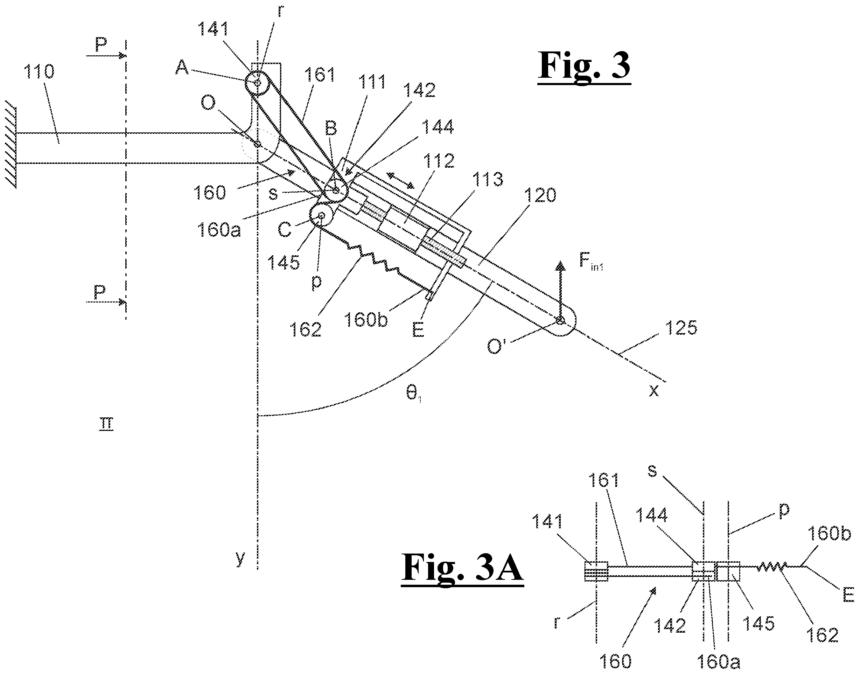

With reference to Fig. 3, another variant of the exemplary embodiment of robotic device 110 of Fig. 1, comprises:

- a first pulley 141 rotatably hinged about an axis r passing through fixed point A and orthogonal to plane $\pi$;
- a second pulley 142 hinged, without possibility of rotation with respect to carriage 111, about an axis s passing through first balancing point B and orthogonal to plane $\pi$;
- a fourth pulley 144 rotatably hinged about axis s passing through first balancing point B and orthogonal to plane $\pi$;
- a fifth pulley 145 rotatably hinged about an axis p passing through a proximal winding point C and orthogonal to plane $\pi$;

Pulleys 141, 142, 144 have all the same groove radius R, while pulley 145 can have a radius of any length.

In this variant, elongated resilient proximal element 160 has a first end 160a constrained to the groove of fourth pulley 144 and a second end 160b constrained to carriage 111 at a second proximal fastening point E.

Like the variant of Fig. 2, elongated resilient proximal element 160 comprises an inextensible portion 161, for example a cable, and a spring 162 but, in this variant, cable 161 has a different routing.

With reference to Fig. 3A, cable 161 starts from pulley 142 and is wound about pulley 141 until it reaches pulley 144, arranged upon pulley 142. The routing continues about pulley 145 and ends at the beginning of spring 162.

Like the variant of Fig. 2, also in this case the action of elongated resilient proximal element 160 is the same as the action of an ideal spring, i.e. of a spring that has a zero rest length, which has an end connected to fixed point A and to first balancing point B.

However, in this exemplary embodiment, the above winding about pulleys 141, 142 and 144 have the further advantage that resilient element 160 is equivalent to an ideal spring that has a stiffness four times higher than the ideal spring of the variant of Fig. 2.

On the contrary, pulley 145 has the advantage of allowing such an arrangement of spring 162 that they it does not interfere with carriage 11 and/or with the adjustment means.

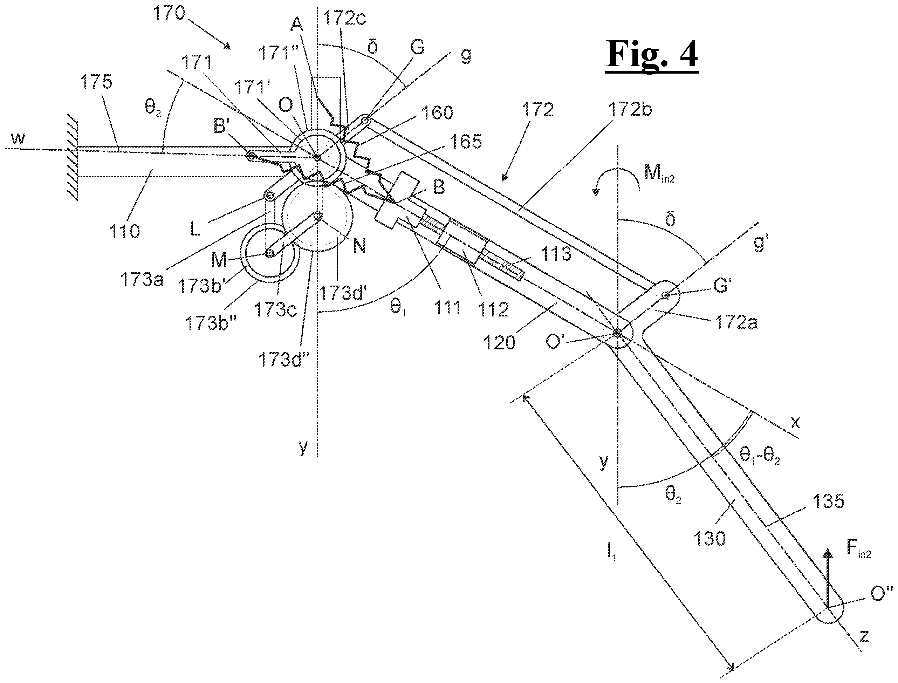

With reference to Fig. 4, an exemplary embodiment of robotic device 100 also comprises a distal arm 130, a balancing lever 171 and a transmission mechanism 170.

Distal arm 130 is pivotally connected to proximal arm 120 at loading point O', and has a second loading point O" arranged at a predetermined distance $l_1$ from loading point O'.

Integrally to distal arm 130, there is a distal axis 135, which passes through points O' and O", and which has a predetermined direction z.

Therefore, due to the pivotal constraint in O', distal axis 135 can carry out a rotation of a predetermined amplitude $\theta_2$. Such rotation of amplitude $\theta_2$ lays in a plane parallel to plane $\pi$. Amplitude $\theta_2$ is defined zero when direction z coincides with direction y, and increases when distal axis 135 rotates counterclockwise.

Balancing lever 171 is pivotally connected to frame 110 at articulation point O. Lever 171 comprises a second balancing point B' arranged at a predetermined distance $b_2$ from articulation point O along a balancing axis 175. This balancing axis 175 has a predetermined direction w and can rotate integrally to balancing lever 171.

The transmission mechanism 170 is adapted to actuate balancing lever 171 in such a way that direction w maintains itself at an angle of amplitude $\theta_2$ with respect to direction x.

In particular, transmission mechanism 170 comprises:

- a four-bar linkage 172 arranged to transmit, upstream of proximal arm 120, an information concerning an angular amplitude $\delta$ that is responsive to angular amplitude $\theta_2$;
- a decoding mechanism 173 arranged to receive the information concerning angular amplitude $\delta$, and to actuate balancing lever 171 in such a way that balancing axis 175 can carry out a rotation of amplitude $\theta_2$ with respect to proximal axis 125.

In this exemplary embodiment, the four-bar linkage 172 comprises:

- an element 172a, integral to distal arm 130 that has a point G' arranged at a predetermined distance O'G' from loading point O' along a direction g' which form an angle of angular amplitude $\delta$ with respect to direction y;
- a lever 172c that is pivotally connected to frame 110 at articulation point O and has a point G located at a distance OG, equal to distance O'G', from articulation point O along a direction g;
- a rod 172b pivotally connected to element 172a at point G', and pivotally connected to lever 172c at point G;

wherein the length of the segment GG' is equal to the length of the segment OO', i.e. $l_1$, so that direction g' is parallel to direction g and, therefore, direction g forms an angle of angular amplitude $\delta$ with respect to direction y.

In this exemplary embodiment, balancing lever 171 comprises a gear 171', of primitive diameter 2/3 Q, hinged at articulation point O and integral to axis 175 of direction w, while proximal arm 120 comprises a gear 171", of primitive diameter Q, hinged at articulation point O and integral to proximal arm 120.

Moreover, decoding mechanism 173 comprises:

- a lever 173a pivotally connected to lever 172c at a point L arranged on axis g and located at a distance OG from articulation point O;
- a gear 173b', of primitive diameter 2/3 Q, hinged at a point M of lever 173a with possibility of rotation with respect to lever 173a itself;
- a gear 173b", of primitive diameter Q, also hinged at point M and integral to gear 173b';
- a lever 173c pivotally connected to lever 173a at point M and pivotally connected to frame 110 at a point N arranged at a predetermined distance from articulation point O along direction y;
- a gear 173of, of primitive diameter Q, rotatably hinged at point N;
- a gear 173d', of primitive diameter 4/3 Q, rotatably hinged at point N;

In particular, segment LM has the same length as segment ON and segment OL has the same length as segment MN, so that segment LM maintains itself always parallel to segment ON, and segment OL remains always parallel to segment MN, which practically forms a four-bar linkage OLMN.

Transmission mechanism 170 aims at maintaining direction w at an angle of amplitude $\theta_2$ with respect to direction x, for any value of $\theta_1$.

If $\theta_2$ is maintained unchanged and $\theta_1$ changes, transmission mechanism 170 achieves its object due to the kinematics described hereinafter.

If $\theta_1$ is changed by an amount $\Delta\theta_1$, gear 171", integral to proximal arm 120, rotates by $\Delta\theta_1$. Gear 171" meshes with gear 173 which meshes with gear 173b". The latter is integral to gear 173b' and causes it to rotate, thus transmitting the rotational movement to gear 173' and then to gear 171' integral to balancing axis 175. The ratio between the primitive diameters of the various gears causes axis 175 to rotate exactly by angle $\Delta\theta_1$ in the same sense as proximal arm 120.

This way, angle $\theta_2$ between balancing axis 175, of direction w, and proximal axis 125, of direction x, is maintained unchanged, since both axes 175 and 125 change by a same amount $\theta_1$.

This way, mechanism 170 takes into account that distal arm 130 is not rotating, and therefore $\theta_2$ is maintained unchanged.

On the contrary, if $\theta_1$ is maintained unchanged and $\theta_2$ changes, transmission mechanism 170 achieves its object due to the kinematics described hereinafter.

Since $\theta_1$ is not changed, gears 171" and 173d' stay still.

If $\theta_2$ is changed by an amount $\Delta\theta_2$, element 172a rotates by $\Delta\theta_2$. Along with it, due to the four-bar linkage 172, also lever 172c rotates about articulation point O by an amount $\Delta\theta_2$. Due to the four-bar linkage OLMN, also lever 173c can rotate with respect to point N by a same amount $\Delta\theta_2$.

Since point M is integral to lever 173c, gears 173b' and 173b" also rotate with respect to point N of the same amplitude $\Delta\theta_2$. Since gear 173of is still, gear 173b" rotates on it, while gear 173b' causes gear 173d" to rotate.

As it is shown, gear 173d" can rotate by an angle of amplitude equal to $\Delta\theta_2/2$. Gear 173d" can cause also gear 171' to rotate but, since gear 173d' has a radius double than gear 171', the rotation of gear 171', and therefore of axis 175, will have exactly the same amplitude as $\Delta\theta_2$.

This way, also in this case, angle $\theta_2$ between balancing axis 175, of direction w, and proximal axis 125, of direction x, is maintained equal to $\theta_2$, since proximal axis 125 remains still, while balancing axis 175 rotates exactly by $\Delta\theta_2$.

If both amplitudes $\theta_1$ and $\theta_2$ change, the above described effects will sum up leading to the same result of the two single cases.

In this exemplary embodiment, robotic device 100 also comprises an elongated resilient distal element 165, of predetermined stiffness $k_2$, constrained to carriage 111 at balancing point B and constrained to balancing lever 171 at point B'.

Elongated resilient distal element 165, by transmission mechanism 170, generates an interaction moment $M_{in2}$ with respect to loading point O' acting on distal arm 130.

Similarly to what described above, with reference to proximal arm 120, moment $M_{in2}$ generates an interaction force $F_{in2}$ applied to second loading point O" and parallel to direction y.

Interaction force $F_{in2}$, as it can be understood through simple mechanical consideration, is related to interaction $M_{in2}$ according to the equation:

$$F_{in2} * l_2 * \sin\theta_2 = M_{in2}$$

In particular, since the segment OB', which has direction w, is at an angle of an amplitude $\theta_2$ with respect to segment OB, which has direction x, interaction moment $M_{in2}$ is given by the equation:

$$M_{in1} = b_2 * b_1 * k_2 * \sin\theta_2$$

and therefore, interaction force $F_{in2}$ depends upon parameters $k_2$, $l_2$, $b_2$ and $b_1$, according to the equation:

$$F_{in1} = b_2 * b_1 * k_1 / l_1$$

In particular, if parameters $b_2$, $k_2$ and $l_2$ are assumed to be constant, $F_{in2}$ can be adjusted by changing balancing distance $b_1$ thus causing carriage 111 to translate along direction x.

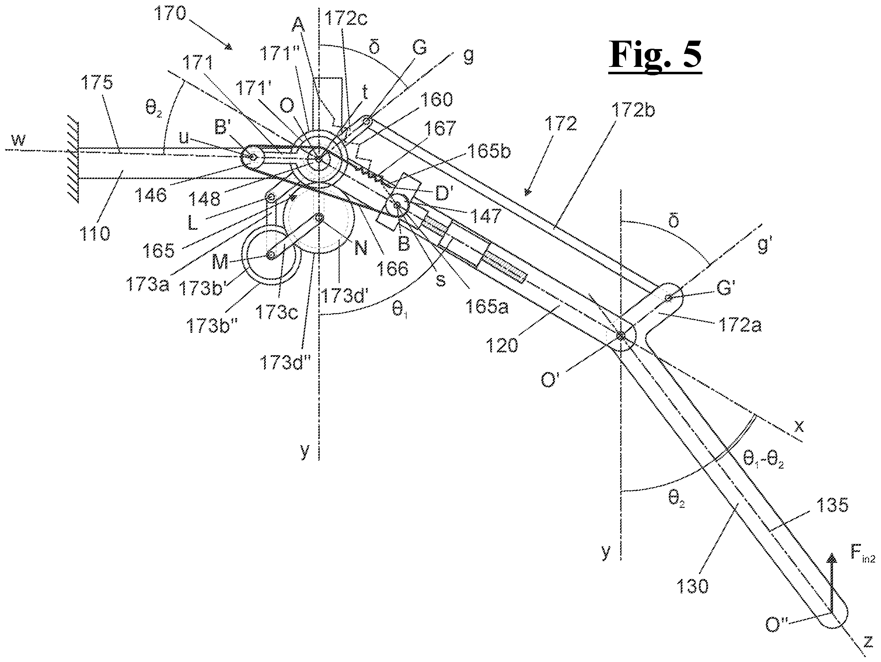

With reference to Fig. 5, a variant of an exemplary embodiment of robotic device 110 of Fig. 4 comprises:

- a sixth pulley 146 rotatably hinged about an axis r passing through fixed point A and orthogonal to plane $\pi$;
- a seventh pulley 147 hinged, with possibility of rotation with respect to carriage 111, about an axis s passing through first balancing point B and orthogonal to plane $\pi$;
- an eighth pulley 148 rotatably hinged about an axis t passing through articulation point O and orthogonal to plane $\pi$;

Pulleys 146, 147, 148 have all the same groove radius R.

Similarly to what described above, with reference to the exemplary embodiment of Fig. 2, elongated resilient distal element 165 has a first end 165a constrained to the groove of seventh pulley 147 and a second end 165b constrained to proximal arm 120 at a first distal fastening point D'.

Moreover, elongated resilient distal element 165 comprises an inextensible portion 166, in particular a cable, that is serially connected to a spring 167. Cable 166 is arranged to be wound about sixth pulley 146, about seventh pulley 147 and about eighth pulley 148, in such a way that the action of elongated resilient distal element 165 is the same as in an ideal spring, i.e. in a spring that has a zero rest length, which has an end connected to second balancing point B' and to first balancing point B.

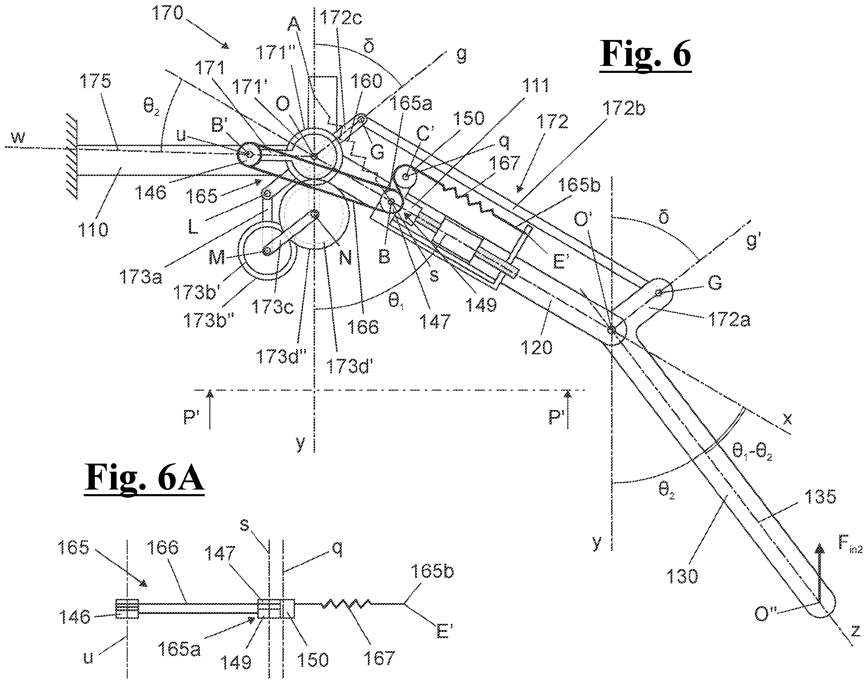

With reference to Fig. 6, another variant of an exemplary embodiment of robotic device 110 of Fig. 4, comprises:

- a sixth pulley 146 rotatably hinged about an axis r passing through fixed point A and orthogonal to plane $\pi$;
- a seventh pulley 147 hinged, without possibility of rotation with respect to carriage 111, about an axis s passing through first balancing point B and orthogonal to plane $\pi$;
- a ninth pulley 149 rotatably hinged about axis s passing through first balancing point B and orthogonal to plane $\pi$;
- a tenth pulley 150 rotatably hinged about an axis p passing through a proximal winding point C and orthogonal to plane $\pi$;

Pulleys 146, 147, 149 have all the same groove radius R, while pulley 150 can have any radius.

In this exemplary embodiment, elongated resilient distal element 165 has a first end 165a constrained to the groove of ninth pulley 149 and a second end 165b constrained to carriage 111 at a second distal fastening point E'.

Like the exemplary embodiment of Fig. 5, elongated resilient distal element 165 comprises an inextensible portion 166, for example a cable, and a spring 167, but in this exemplary embodiment cable 166 has a different routing.

With reference to Fig. 6A, cable 166 starts from pulley 147 and is wound about pulley 146 until it reaches pulley 149, which is arranged upon pulley 147. The routing continues about pulley 150 and ends at the beginning of spring 167.

Like the exemplary embodiment of Fig. 5, also in this case the action of elongated resilient distal element 165 is the same as the action of an ideal spring, i.e. of a spring that has a zero rest length, which has an end connected to second balancing point B' and to first balancing point B.

However, in this exemplary embodiment, said winding arrangement about pulleys 146, 147 and 149 has the further advantage that resilient element 165 is equivalent to an ideal spring having a stiffness four times higher than the hypothetic ideal spring of the variant of Fig. 5.

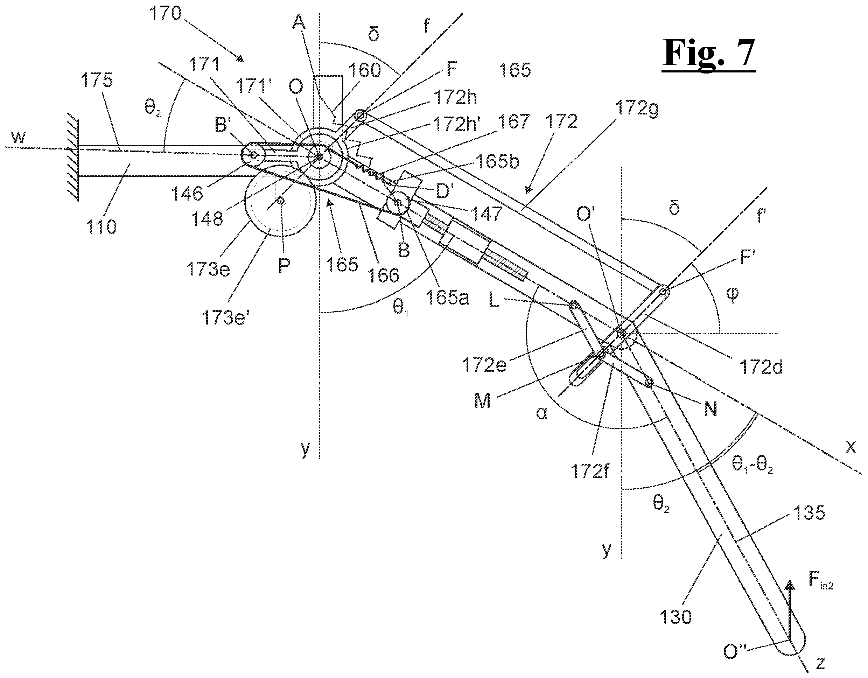

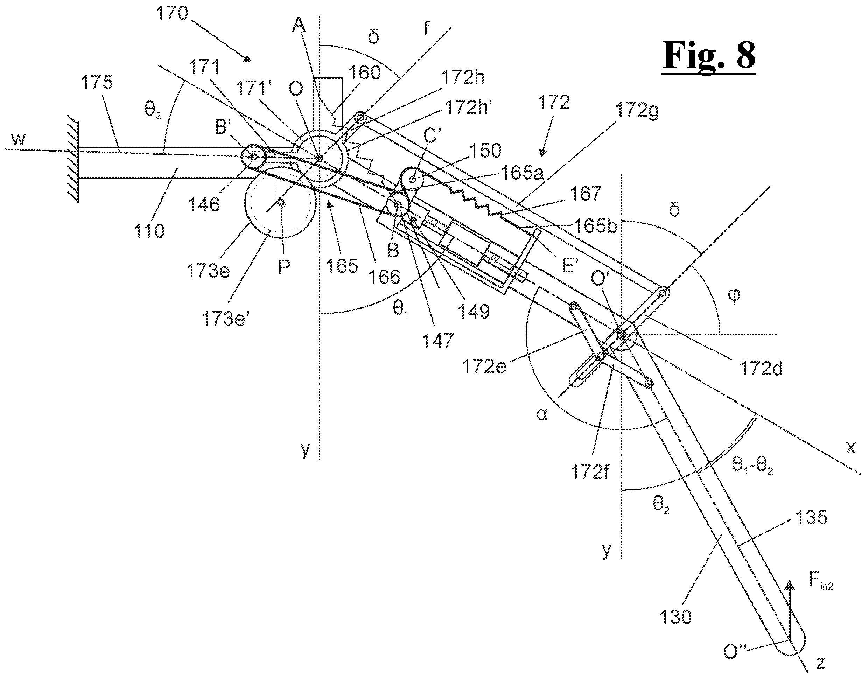

On the contrary, pulley 150 has the advantage of allowing such an arrangement of spring 167 in such a way that it does not interfere with carriage 111 and/or with the adjustment means. A variant of an exemplary embodiment of Fig. 4 is shown in Figs. 7 and 8.

Figs. 7 and 8 differ from each other by the fact that different embodiments of elongated resilient proximal element 165, and of the pulleys required for winding the cable are shown.

In particular, Fig. 7 provides a solution similar to the one of the variant of Fig. 5, while Fig. 8 provides a solution similar to the one of the variant of Figs. 6 and 6A.

In the exemplary embodiments of Figs. 7 and 8, transmission mechanism 170 comprises:

- a lever 172d that is pivotally connected to proximal arm 120 and to distal arm 130 at point O", and that have a point G' arranged at a predetermined distance O'F' from loading point O' along a direction f' at an angle of angular amplitude $\delta$ with respect to direction Y;
- a lever 172e that is pivotally connected to proximal arm 120 at a point L;
- a lever 172f that is pivotally connected to distal arm 130 at a point M, and that is pivotally connected to lever 172e at a point M slidable with respect to lever 172d along axis f'.

In particular, segment LM has the same length as segment ON and segment OL has the same length as segment MN, so that segment LM remains always parallel to segment ON, and segment OL remains always parallel to segment MN, which practically forms a four-bar linkage OLMN.

Through easy geometric considerations it can be verified that, under such conditions, angle $\alpha$ has the value $\pi+\theta_1+\theta_2$, and therefore angle $\delta$ has the value $[\pi/2-\theta_1+ \theta_2/2]$ and angle $\varphi$ has the value $\theta_1+\theta_2/2$.

Moreover, in this variant, four-bar linkage 172 comprises:

- a lever 172h pivotally that is connected to frame 110 at articulation point O, and that has a point F located at a distance OF equal to the distance O'F' from articulation point O, along a direction f;
- a rod 172g pivotally connected to lever 172d at point F' and pivotally connected to lever 172h at a point F; wherein the length of the segment FF' is equal to the length of segment OO', i.e. $I_1$, so that direction f' is parallel to direction f and that, therefore, direction f forms an angle of angular amplitude $\delta$ with respect to direction y.

Like in the solution of Figs. 5 and 6, balancing lever 171 comprises a gear 171' of primitive diameter 2/3 Q that is hinged at articulation point O and is integral to axis 175 of direction w.

Furthermore, lever 172h comprises a gear 172h' of primitive diameter Q that is hinged at articulation point O and is integral to lever 172h.

In this exemplary embodiment, decoding mechanism 173 comprises:

- a gear 173e of primitive diameter 4/3 Q pivotally connected to frame 110 at a point P;
- a gear 173e' of primitive diameter Q pivotally connected to frame 110 at point P.

Even in this case, the object of transmission mechanism 170 is to maintain direction w at an angle of amplitude $\theta_2$ with respect to direction x, for any value of $\theta_1$.

If $\theta_2$ is maintained unchanged and $\theta_1$ changes, transmission mechanism 170 achieves its object due to the kinematics described hereinafter.

If $\theta_1$ is changed by an amount $\Delta\theta_1$, angle $\varphi$ changes by $\Delta\theta_1/2$ and levers 172d and 172h rotate by this amplitude $\Delta\theta_1/2$ in the same direction as proximal arm 120.

Since gear 172h' is integral to lever 172h, it also rotates by $\Delta\theta_1/2$. The latter meshes with gear 173e', which is integral to gear 173e and transmits the rotational movement to gear 171'.

The ratio between the primitive diameters of gears 173e and 171' is 2, therefore gear 171' carries out a double rotation with respect to gear 173e.

Since gear 173e rotates by $\Delta\theta_1/2$, gear 171' rotates by exactly $\Delta\theta_1$, along with balancing axis 175 integral to it.

This way, angle $\theta_2$ between balancing axis 175, of direction w, and proximal axis 125, of direction x, is maintained unchanged since both axes 175 and 125 changes by a same amount $\theta_1$. This way, mechanism 170 takes into account that distal arm 130 is not rotating, and therefore $\theta_2$ is maintained unchanged.

On the contrary, if $\theta_1$ is maintained unchanged and $\theta_2$ changes, transmission mechanism 170 achieves its object due to the kinematics described hereinafter.

If $\theta_2$ is changed by an amount $\Delta\theta_2$, angle $\varphi$ changes by $\Delta\theta_2/2$, and the lever 172d and 172h rotate by the amplitude $\Delta\theta_2/2$ in the same direction as wheel distal arm 130.

Since gear 172h is integral to lever 172h, it also rotates by $\Delta\theta_2/2$. The latter meshes with gear 173e' Is that it is integral to gear 173e and transmits the rotational movement to gear 171'.

The ratio between the primitive diameters of gears 173e and 171' is 2, therefore gear 173e rotates by $\Delta\theta_2/2$, gear 171' rotates by exactly $\Delta\theta_2$, and also balancing axis 175 integrally with it.

This way, even in this case, angle $\theta_2$ between balancing axis 175, which has direction w, and proximal axis 125, which has direction x, is maintained equal to $\theta_2$, since proximal axis 125 remains still, while balancing axis 175 rotates exactly by $\Delta\theta_2$.

If both amplitudes $\theta_1$ and $\theta_2$ change, the above described effects will sum up leding to the same result of the two single cases.

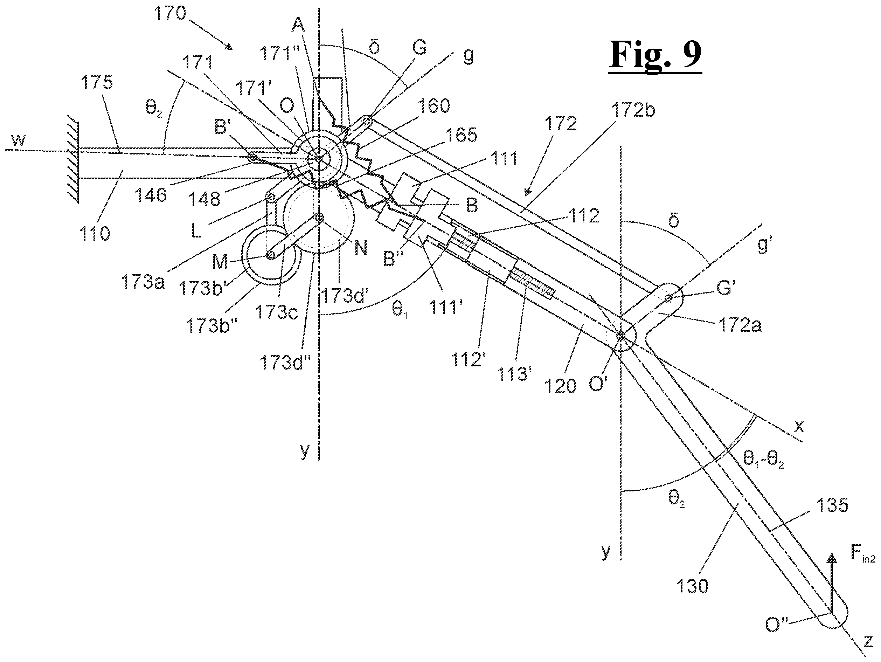

With reference to Fig. 9, an exemplary embodiment of robotic device 100 comprises an auxiliary carriage 111', an auxiliary actuator 112' and an auxiliary adjustment screw 113'. In this figure, these auxiliary components are shown arranged on the primary components, i.e. carriage 111, actuator 112 and screw 113. As an alternative, the auxiliary components could be arranged at the opposite edge of the proximal arm.

In particular, auxiliary carriage 111' is slidingly arranged on proximal arm 120 and comprises a third balancing point B" located at a predetermined second balancing distance $a_2$ from articulation point O.

Like carriage 111, also auxiliary carriage 111' can translate along axis x, in order to adjust second balancing distance $a_2$.

Similarly to actuator 112 and to adjustment screw 113, auxiliary actuator 112' and auxiliary adjustment screw 113' are adapted to actuate auxiliary carriage 111'.

In particular, the exemplary embodiment of Fig. 1C can be used even for moving auxiliary carriage 111'.

In the exemplary embodiment of Fig. 9, elongated resilient distal element 165 is constrained to third balancing point B" instead of to first balancing point B, as it is the case, instead, for the exemplary embodiment of Fig. 4.

As a consequence, the elastic force generated by this resilient distal element 165 does not depend upon balancing distance $b_1$ any longer, on the contrary it depends upon second balancing distance $a_2$.

As anticipated, therefore, interaction force $F_{in2}$ will depend upon second balancing distance $a_2$ according to the equation:

$$F_{in2} = k_2 * b_2 * a_2 / l_2$$

The advantage of this exemplary embodiment is that two interaction forces $F_{in1}$ and $F_{in2}$ can be adjusted independently from each other by modifying the two parameters $b_1$ and $a_2$, which can be changed by causing carriage 111' and auxiliary carriage 111' to translate, respectively.

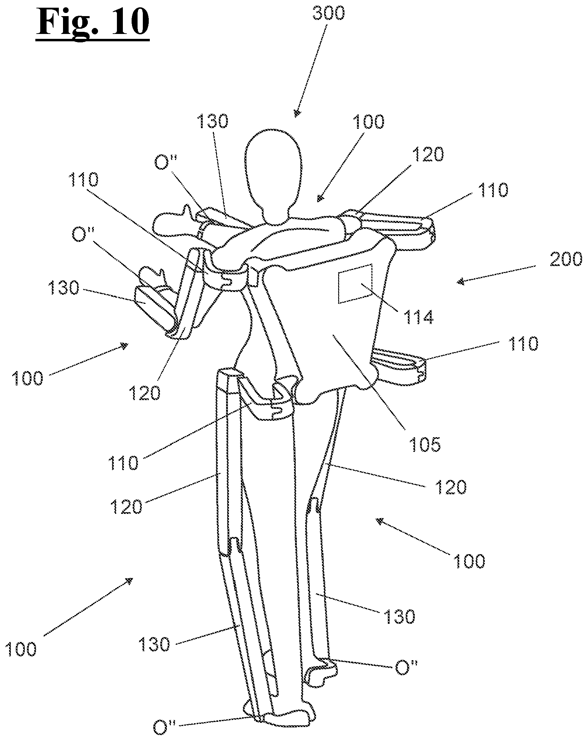

With reference to Fig. 10, an exoskeleton structure 200 for assisting the movements of at least one human limb comprises four robotic apparatuses 100 as shown in any of Figs. 4 to 9.

However, a different exoskeleton structure 200 can also be provided that comprises at least one robotic device 100 as described above, with reference to Figs. 1 to 9.

In particular, in the example shown in Fig. 10, the interaction forces $F_{in1}$ and $F_{in2}$ can resist the weight force of the human limbs, in particular they can balance or increase it.

This weight force is applied to each robotic device 100 at points O", i.e. at the points in which a contact occurs between each robotic device 100 and the limb associated to it.

Frames 110 of each robotic device 100 are connected to each other by a frame 105 for maintaining frames 110 in a position substantially parallel to the ground, so that they have a direction y substantially parallel to the weight force of the limbs.

Moreover, frame 105 can house control unit 114 and a possible accumulator for supplying the actuators.

The foregoing description of a specific exemplary embodiment will so fully reveal the invention according to the conceptual point of view, so that others, by applying current knowledge, will be able to modify and/or adapt in various applications the specific exemplary embodiment without further research and without parting from the invention and, accordingly, it is meant that such adaptations and modifications will have to be considered as the same as the specific embodiment. The means and the materials to realise the different functions described herein could have a different nature without, for this reason, departing from the field of the invention. It is to be understood that the phraseology or terminology that is employed herein is for the purpose of description and not of limitation.

**Claims**

1. A robotic device (100) for generating forces assisting or resisting the movement of the human body, said robotic device comprising:

    - a frame (110) having a fixed point (A) and an articulation point (O), integral to said frame (110), said fixed point (A) arranged at a predetermined distance ($a_1$) from said articulation point (O) ;
    - a proximal arm (120), pivotally connected to said frame (110) at said articulation point (O), said proximal arm (120) having a loading point (O') arranged at a predetermined distance ($l_1$) from said articulation point (O) along a proximal axis (125), said proximal axis (125) having a predetermined direction (x) and arranged to rotate by a first rotation of a predetermined amplitude ($\theta_1$), said first rotation of a predetermined amplitude ($\theta_1$) lying in a plane ($\pi$) containing said fixed point (A) and said proximal axis (125), wherein said first predetermined amplitude ($\theta_1$) is zero when said predetermined direction (x) coincides with a predetermined direction (y) passing through said fixed point (A) and through said articulation point (O) ;

- a elongated resilient proximal element (160) that has a predetermined stiffness ($k_1$), constrained to said proximal arm (120) and to said frame (110), in order to generate an interaction moment ($M_{in1}$) with respect to said articulation point (O), said interaction moment ($M_{in1}$) acting on said proximal arm (120) and configured to generate an interaction force ($F_{in1}$) on said proximal arm (120) parallel to said direction (y) and applied to said loading point (0'), said interaction force ($F_{in1}$) correlated to said interaction moment ($M_{in1}$) according to the equation $F_{in1}*l_1*\sin(\theta_1) = M_{in1}$;

**characterized in that** it also comprises:

- a carriage means (111, 111') comprising a carriage (111), said carriage (111) slidingly arranged on said proximal arm (120) and having a first balancing point (B) arranged on said proximal axis (125), said first balancing point (B) arranged at a predetermined balancing distance ($b_1$) from said articulation point (O), said carriage (111) arranged to move along said proximal axis (125);
- an adjustment means (112, 112', 113, 113', 114) arranged to automatically actuate said carriage means (111, 111') along said proximal axis (125), said adjustment means (112, 112', 113, 113', 114) configured to adjust said balancing distance ($b_1$) ;

**in that** said interaction moment ($M_{in1}$) correlated to said balancing distance ($b_1$) according to the equation $k_1*a_1*b_1*\sin(\theta_1) = M_{in1}$, in such a way that said interaction force ($F_{in1}$) is correlated to said balancing distance ($b_1$) according to the equation $F_{in1} = (k_1*a_1*b_1)/l_1$, for any value of $\theta11$ **and in that** said adjustment means (112, 112', 113, 113', 114) comprises:

- an actuator (112), in particular a motor, integral to said proximal arm (120), arranged to actuate said carriage (111) for adjusting said balancing distance (b1);
- a control unit (114) arranged to receive input data, to analyse said input data and to operate said actuator (112) for adjusting said balancing distance (b1) on the basis of said input data.

2. Robotic device (100) according to claim 1, wherein said elongated resilient proximal element (160) is constrained to a plurality of guide elements (141-150) configured for guiding said elongated resilient proximal element (160) according to a predetermined routing.

3. Robotic device (100) according to claim 2, wherein at least one guide element (141-150) of said plurality is a pulley (141-150) provided with a groove and hinged about a rotation axis substantially orthogonal to said plane ($\pi$), said elongated resilient proximal element (160) constrained in said groove.

4. Robotic device (100) according to claim 2, wherein said plurality of guide elements (141-150) comprises:

- a first pulley (141) having a predetermined groove radius (R), said first pulley (141) hinged, with possibility of rotation with respect to said frame (110), about an axis (r) passing through said fixed point (A) and orthogonal to said plane (n);
- a second pulley (142) having said predetermined groove radius (R), said second pulley (142) hinged, without possibility of rotation with respect to said carriage (111), about an axis (s) passing through said first balancing point (B) and orthogonal to said plane ($\pi$);
- a third pulley (143) having said predetermined groove radius (R), said third pulley (143) hinged, with possibility of rotation with respect to said frame (110), about an axis (t) passing through said articulation point (O) and orthogonal to said plane ($\pi$);

said elongated resilient proximal element (160) having a first end (160a) constrained to said second pulley (142) at said groove and a second end (160b) constrained to said proximal arm (120) at a first proximal fastening point (D), said elongated resilient proximal element (160) comprising an inextensible portion (161) and a spring (162), connected to each other in series, said inextensible portion (161) arranged to be wound about said first pulley (141), about said second pulley (142) and about said third pulley (143), in such a way that the action of said elongated resilient proximal element (160) is the same as the action of an ideal spring, i.e. of a spring that has a zero rest length, which has an end connected to said fixed point (A) and to said first balancing point (B).

5. Robotic device (100) according to claim 4, wherein said plurality of guide elements (141-150) also comprises:

- a first pulley (141) having a predetermined groove radius (R), said first pulley (141) hinged, with possibility of rotation with respect to said frame (110), about an axis (r) passing through said fixed point (A) and orthogonal to said plane (n);
- a second pulley (142) having said predetermined groove radius (R), said second pulley (142) hinged, without possibility of rotation with respect to said carriage (111), about an axis (s) passing through said first balancing point (B) and orthogonal to said plane ($\pi$);
- a fourth pulley (144) having said predetermined groove radius (R), said fourth pulley (144) hinged, with possibility of rotation with respect to said carriage (111), about an axis (s) passing through said first balancing point (B) of said carriage (111) and orthogonal to said plane ($\pi$);

said elongated resilient proximal element (160) having a first end (160a) constrained to said second pulley (142) at said groove and a second end (160b) constrained to said carriage (111) at a second proximal fastening point (E), said elongated resilient proximal element (160) comprising an inextensible portion (161) and a spring (162), connected to each other in series, said inextensible portion (161) arranged to be wound about said first pulley (141), about said second pulley (142) and about said fourth pulley (144), in such a way that the action of said elongated resilient proximal element (160) is the same as the action of an ideal spring, i.e. of a spring that has a zero rest length, which has an end connected to said fixed point (A) and to said first balancing point (B), in particular said ideal spring having a stiffness (k) such that $k = 4*k_1$.
in particular said plurality of guide elements (141-150) also comprising:

- a fifth pulley (145) hinged, with possibility of rotation with respect to said carriage (111), about an axis (p) passing through a proximal winding point (C) of said carriage (111) and orthogonal to said plane ($\pi$);

said inextensible portion (161) arranged to be wound also about said fifth pulley (145).

6. Robotic device (100) according to claim 1, wherein said adjustment means (112, 112', 113, 113', 114) comprises an adjustment screw (113) arranged to be brought into rotation by said actuator (112) for actuating said carriage (111) along said proximal axis (125).

7. Robotic device (100), according to any of the previous claims, said robotic device (100) also comprising:

- a distal arm (130) pivotally connected to said proximal arm (120) at said loading point (O'), said distal arm (130) having a second loading point (O") arranged at a predetermined distance ($l_2$) from said loading point (O') along a distal axis (135), said distal axis (135) having a predetermined direction (z) and arranged for carrying out a second rotation of a predetermined amplitude ($\theta_2$), said second rotation of a predetermined amplitude ($\theta_2$) lying in a plane parallel to said plane ($\pi$), wherein said second predetermined amplitude ($\theta_2$) is zero when said predetermined direction (z) coincides with said predetermined direction (y);
- a balancing lever (171) pivotally connected to said frame (110) at said articulation point (O), said balancing lever (171) having a second balancing point (B') and having a balancing axis (175) that has a predetermined direction (w), said balancing axis (175) passing through said articulation point (O) and through said second balancing point (B'), said second balancing point (B') arranged at a predetermined distance ($b_2$) from said articulation point (O) ;
- a transmission mechanism (170) arranged to actuate said balancing lever (171) in such a way that said balancing axis (175) can carry out a rotation of amplitude $\theta_2$ with respect to said proximal axis (125);
- an elongated resilient distal element (165) that has a predetermined stiffness ($k_2$), constrained to said proximal arm (120), to said frame (110) and to said balancing lever (171), in order to generate an interaction moment ($M_{in2}$) with respect to said loading point (O'), said interaction moment ($M_{in2}$) acting on said distal arm (130) and configured to generate an interaction force ($F_{in2}$) on said distal arm (130) parallel to said direction (y) and applied to said second loading point (O"), said interaction force ($F_{in2}$) correlated to said interaction moment ($M_{in2}$) according to the equation $F_{in2}*l_2*\sin(\theta_2) = M_{in2}$;

8. Robotic device (100), according to claim 7, wherein said interaction moment ($M_{in2}$) is correlated to said balancing distance ($b_1$) according to the equation $k_2*b_2*b_1*\sin(\theta_2) = M_{in2}$, in such a way that said interaction force ($F_{in2}$) is correlated to said balancing distance ($b_1$) according to the equation $F_{in2} = (k_2*b_2*b_1)/l_2$ for any value of $\theta_2$.

9. Robotic device (100) according to claim 5, wherein said plurality of guide elements (141-150) comprises:

- a sixth pulley (146) having a predetermined groove radius (R), said sixth pulley (146) hinged, with possibility of rotation with respect to said frame (110), about an axis (u) passing through said second balancing point (B') and orthogonal to said plane ($\pi$);
- a seventh pulley (147) having said predetermined groove radius (R), said seventh pulley (147) hinged, without possibility of rotation with respect to said balancing lever (171), about an axis (s) passing through said first balancing point (B) and orthogonal to said plane ($\pi$);
- an eighth pulley (148) having said predetermined groove radius (R), said eighth pulley (148) hinged, with possibility of rotation with respect to said frame (110), about an axis (t) passing through said articulation point (O) and orthogonal to said plane ($\pi$);

said elongated resilient distal element (165) having a first end (165a) constrained to said seventh pulley (147) at said groove and a second end (160b) constrained to said proximal arm (120) at a first distal fastening point (OF), said elongated resilient distal element (165) comprising an inextensible portion (166) and a spring (167), connected to each other in series, said inextensible portion (166) arranged to be wound about said sixth pulley (146), about said seventh pulley (147) and about said eighth pulley (148), in such a way that the action of said elongated resilient distal element (165) is the same as the action of an ideal spring, i.e. of a spring that has a zero rest length, which has an end connected to said second balancing point (B') and to said first balancing point (B).

10. Robotic device (100) according to claim 5, wherein said plurality of guide elements (141-150) comprises:

- a sixth pulley (146) having a predetermined groove radius (R), said sixth pulley (146) hinged, with possibility of rotation with respect to said balancing lever (171), about an axis (u) passing through said second balancing point (B') and orthogonal to said plane ($\pi$);
- a seventh pulley (147) having said predetermined groove radius (R), said seventh pulley (147) hinged, without possibility of rotation with respect to said carriage (111), about an axis (s) passing through said first balancing point (B) and orthogonal to said plane ($\pi$);
- a ninth pulley (149) having said predetermined groove radius (R), said ninth pulley (149) hinged, with possibility of rotation with respect to said carriage (111), about an axis (s) passing through said first balancing point (B) of said carriage (111) and orthogonal to said plane ($\pi$);

said elongated resilient distal element (165) having a first end (165a) constrained to said seventh pulley (147) at said groove and a second end (165b) constrained to said carriage (111) at a second distal fastening point (E'), said elongated resilient proximal element (165) comprising an inextensible portion (166) and a spring (167), connected to each other in series, said inextensible portion (166) arranged to be wound about said sixth pulley (146), about said seventh pulley (147) and about said ninth pulley (149), in such a way that the action of said elongated resilient distal element (165) is the same as the action of an ideal spring, i.e. of a spring that has a zero rest length, which has an end connected to said second balancing point (B') and to said first balancing point (B), in particular said ideal spring having a stiffness (k) such that $k = 4*k_2$.
in particular said plurality of guide elements (141-150) also comprising:

- a tenth pulley (150) hinged, with possibility of rotation with respect to said carriage (111), about an axis (q) that passes through a distal winding point (C') of said carriage (111) and that is orthogonal to said plane (n);

said inextensible portion (161) arranged to be wound also about said tenth pulley (150).

11. Robotic device (100) according to any of claims from 8 to 10, wherein said transmission mechanism (170) comprises:

- a four-bar linkage (172) arranged to transmit, upstream of said proximal arm (120), an information concerning an angular amplitude ($\delta$) that is responsive to said angular amplitude ($\theta_2$);
- a decoding mechanism (173) arranged to receive said information concerning said angular amplitude ($\delta$), and to actuate said balancing lever (171) in such a way that said balancing axis (175) can carry out a rotation of amplitude $\theta_2$ with respect to said proximal axis (125),.

12. Robotic device (100) according to claim 8, wherein said carriage means (111, 111') also comprises an auxiliary carriage (111'), said auxiliary carriage (111') slidingly connected to said proximal arm (120) and having a third balancing point (B") arranged on said proximal axis (125), said third balancing point (B") located at a predetermined second balancing distance ($a_2$) from said articulation point (O), said auxiliary carriage (111') arranged to move along said proximal axis (125), in order to adjust said second balancing distance ($a_2$) ;
and wherein said adjustment means (112, 112', 113, 113', 114) also comprises:

- an auxiliary actuator (112'), in particular a motor, integral to said proximal arm (120), arranged to actuate said auxiliary carriage (111') for adjusting said second balancing distance ($a_2$);
- an auxiliary adjustment screw (113') arranged to be brought into rotation by said auxiliary actuator (112') for actuating said auxiliary carriage (111') along said proximal axis (125);

said interaction moment ($M_{in2}$) correlated to said second balancing distance ($a_2$) according to the equation $k_2*b_2*a_2*\sin(\theta_2) = M_{in2}$, so that said interaction force ($F_{in2}$) is correlated to said second balancing distance ($a_2$) according to the equation $F_{in2} = (k_2*b_2*a_2)/l_2$ for any value of $\theta_2$.

**13.** Robotic device (100) according to claim 12, wherein:

- at least one adjustment screw among said adjustment screw (113) and said auxiliary adjustment screw (113') is a ball screw having a rotation axis (v) parallel to said direction (x), said ball screw comprising an inner core (113a) and a nut (113b), said inner core (113a) integral to said carriage means (111, 111') and arranged to translate along said rotation axis (v), in consequence of a rotation of said nut (113b) about said rotation axis (v);
- at least one actuator among said actuator (112) and said auxiliary actuator (112') comprises a stator (112a), integral to said proximal arm (120), and a rotor (112b), integral to said nut (113b) and arranged to rotate about said rotation axis (v), bringing into rotation also said nut (113b) ;

in such a way that a rotation of said rotor (112b) about said rotation axis (v) causes a translation of said inner core (113a) along said rotation axis (v) and therefore a translation said carriage means (111, 111') along said proximal axis (125).

**14.** Robotic device (100) according to claim 12, wherein at least one actuator among said actuator (112) and said auxiliary actuator (112') comprises an electromechanical brake (112c) that is arranged to move from a locked configuration, in which said electromechanical brake (112c) is not powered and said actuator (112), and/or said auxiliary actuator (112'), cannot actuate said carriage means (111, 111'), to an unlocked configuration, in which said electromechanical brake (112c) is powered and said actuator (112) and/or said auxiliary actuator (112') can rotate thus moving said adjustment screw (113), and/or said auxiliary adjustment screw (113'), of said adjustment means (112, 112', 113, 113', 114).

**15.** An exoskeleton structure (200) for assistance to handling at least one human limb, said exoskeleton structure (200) **characterized in that** it comprises at least one robotic device (100) for assistance to the human force according to any of claims from 1 to 14.

**Patentansprüche**

**1.** Robotvorrichtung (100) zum Erzeugen von Kräften, die die Bewegung des menschlichen Körpers unterstützen oder sich dieser widersetzen, wobei die Robotvorrichtung aufweist:

- einen Rahmen (110) mit einem festen Punkt (A) und einem Gelenkpunkt (O), die mit dem Rahmen (110) fest verbunden sind, wobei der feste Punkt (A) in einem vorbestimmten Abstand ($a_1$) von dem Gelenkpunkt (O) angeordnet ist;
- einen proximalen Arm (120), der schwenkbar mit dem Rahmen (110) an dem Gelenkpunkt (O) verbunden ist, wobei der proximale Arm (120) einen Lastangriffspunkt (O') hat, der in einem vorbestimmten Abstand ($l_1$) von dem Gelenkpunkt (O) entlang einer proximalen Achse (125) angeordnet ist, wobei die proximale Achse (125) eine vorbestimmte Richtung (x) hat und so angeordnet ist, dass sie sich um eine erste Drehung mit einer vorbestimmten Amplitude ($\theta_1$) dreht, wobei die erste Drehung mit einer vorbestimmten Amplitude ($\theta_1$) in einer Ebene ($\Pi$) liegt, die den festen Punkt (A) und die proximale Achse enthält (125), wobei die erste vorbestimmte Amplitude ($\theta 1$) Null ist, wenn die vorbestimmte Richtung (x) sich mit einer vorbestimmten Richtung (y) deckt, die durch den festen Punkt (A) und durch den Gelenkpunkt (O) führt;
- ein längliches nachgiebiges proximales Element (160), das eine vorbestimmte Steifigkeit ($k_1$) hat, das an den proximalen Arm (120) und den Rahmen (110) gebunden ist, um ein Interaktionsmoment ($M_{in1}$) in Bezug auf den Gelenkpunkt (O) zu erzeugen, wobei das Interaktionsmoment ($M_{in1}$) auf den proximalen Arm (120) wirkt und so ausgelegt ist, dass eine Interaktionskraft ($F_{in1}$) an dem proximalen Arm (120) parallel zu der Richtung (y) erzeugt wird und an den Belastungsangriffspunkt (O') angelegt wird, wobei die Interaktionskraft ($F_{in1}$) mit dem Interaktionsmoment ($M_{in1}$) gemäß der Gleichung $F_{in1}*l_1*\sin(\theta_1) = M_{in1}$ in Beziehung steht;

**dadurch gekennzeichnet, dass** sie ebenfalls aufweist:

- ein Schlittenmittel (111, 111') das einen Schlitten (111) aufweist, wobei der Schlitten (111) gleitend auf dem proximalen Arm (120) angeordnet ist und einen ersten Ausgleichspunkt (B) hat, der auf der proximalen Achse (125) angeordnet ist, wobei der erste Ausgleichspunkt (B) in einem vorbestimmten Ausgleichsabstand ($b_1$) von dem Gelenkpunkt (O) angeordnet ist, wobei der Schlitten (111) so angeordnet ist, dass er sich entlang der proximalen Achse (125) bewegt;
- ein Anpassungsmittel (112, 112', 113, 113', 114), das angeordnet ist, um das Schlittenmittel (111, 111') automatisch entlang der proximalen Achse (125) in Bewegung zu setzen, wobei das Anpassungsmittel (112, 112', 113, 113', 114) so ausgelegt ist, dass es den Ausgleichsabstand ($b_1$) anpasst;

dadurch, dass das Interaktionsmoment ($M_{in1}$), das mit dem Ausgleichsabstand ($b_1$) gemäß der Gleichung $k_1 * a_1 * b_1 * \sin(\theta_1) = M_{in1}$ derart in Beziehung steht, dass die Interaktionskraft ($F_{in1}$) mit dem Ausgleichsabstand ($b_1$) gemäß der Gleichung $F_{in1} = (k_1 * a_1 * b_1)/l_1$ für jeden Wert $\theta_1$ in Beziehung steht;
und dadurch, dass das Anpassungsmittel (112, 112', 113, 113', 114) aufweist:

- einen Stellantrieb (112), insbesondere einen Motor, der mit dem proximalen Arm (120) fest verbunden ist, angeordnet, um den Schlitten (111) in Bewegung zu setzen, um den Ausgleichsabstand anzupassen (b1);
- eine Steuereinheit (114), die angeordnet ist, um Eingabedaten zu empfangen, die Eingabedaten zu analysieren und den Stellantrieb (112) zum Anpassen des Ausgleichsabstands (b1) auf Grundlage der Eingabedaten zu betätigen.

2. Robotvorrichtung (100) nach Anspruch 1, wobei das längliche nachgiebige proximale Element (160) an eine Mehrzahl von Führungselementen (141-150) gebunden ist, die zum Führen des länglichen nachgiebigen proximalen Elements (160) gemäß einem vorbestimmten Leitweg ausgelegt sind.

3. Robotvorrichtung (100) nach Anspruch 2, wobei mindestens ein Führungselement (141-150) der Mehrzahl eine Umlenkrolle ist (141-150), die mit einer Rille versehen ist und um eine Drehachse drehbar angebracht ist, die im Wesentlichen orthogonal zu der Ebene (Π) verläuft, wobei das längliche nachgiebige proximale Element (160) in der Rille gehalten wird.

4. Robotvorrichtung (100) nach Anspruch 2, wobei die Mehrzahl von Führungselementen (141-150) aufweist:

- eine erste Umlenkrolle (141) mit einem vorbestimmten Rillenradius (R), wobei die erste Umlenkrolle (141) mit der Möglichkeit einer Drehung in Bezug auf den Rahmen (110), um eine Achse (r) drehbar angebracht ist, die durch den festen Punkt (A) und orthogonal zu der Ebene (Π) verläuft;
- eine zweite Umlenkrolle (142) mit dem vorbestimmten Rillenradius (R), wobei die zweite Umlenkrolle (142) ohne Möglichkeit einer Drehung in Bezug auf den Schlitten (111), um eine Achse (s) drehbar angebracht ist, die durch den ersten Ausgleichspunkt (B) und orthogonal zu der Ebene (Π) verläuft;
- eine dritte Umlenkrolle (143) mit dem vorbestimmten Rillenradius (R), wobei die dritte Umlenkrolle (143) mit der Möglichkeit einer Drehung in Bezug auf den Rahmen (110), um eine Achse (r) drehbar angebracht ist, die durch den Gelenkpunkt (O) und orthogonal zu der Ebene (Π) verläuft;

wobei das längliche nachgiebige proximale Element (160) ein erstes Ende (160a) hat, das an der zweiten Umlenkrolle (142) an der Rille gehalten wird, und ein zweites Ende (160b), das an dem proximalen Arm (120) an einem ersten proximalen Befestigungspunkt (D) gehalten wird,
wobei das längliche nachgiebige proximale Element (160) einen undehnbaren Abschnitt (161) und eine Feder (162) aufweist, die in Reihe miteinander verbunden sind, wobei der undehnbare Abschnitt (161) angeordnet ist, um so um die erste Umlenkrolle (141), um die zweite Umlenkrolle (142) und um die dritte Umlenkrolle (143) gewickelt zu werden, dass die Aktion des länglichen nachgiebigen proximalen Elements (160) dieselbe ist wie die Aktion einer idealen Feder, d.h. einer Feder mit einer Restlänge Null, wobei ein Ende mit dem festen Punkt (A) und mit dem ersten Ausgleichspunkt (B) verbunden ist.

5. Robotvorrichtung (100) nach Anspruch 4, wobei die Mehrzahl von Führungselementen (141-150) ebenfalls aufweist:

- eine erste Umlenkrolle (141) mit einem vorbestimmten Rillenradius (R), wobei die erste Umlenkrolle (141) mit der Möglichkeit einer Drehung in Bezug auf den Rahmen (110), um eine Achse (r) drehbar angebracht ist, die durch den festen Punkt (A) und orthogonal zu der Ebene (Π) verläuft;

- eine zweite Umlenkrolle (142) mit dem vorbestimmten Rillenradius (R), wobei die zweite Umlenkrolle (142) ohne Möglichkeit einer Drehung in Bezug auf den Schlitten (111), um eine Achse (s) drehbar angebracht ist, die durch den ersten Ausgleichspunkt (B) und orthogonal zu der Ebene (Π) verläuft;
- eine vierte Umlenkrolle (144) mit dem vorbestimmten Rillenradius (R), wobei die vierte Umlenkrolle (144) mit der Möglichkeit einer Drehung in Bezug auf den Schlitten (111), um eine Achse (s) drehbar angebracht ist, die durch den ersten Ausgleichspunkt (B) des Schlittens (111) und orthogonal zu der Ebene (Π) verläuft;

wobei das längliche nachgiebige proximale Element (160) ein erstes Ende (160a) hat, das an der zweiten Umlenkrolle (142) an der Rille gehalten wird, und ein zweites Ende (160b), das an dem Schlitten (111) an einem zweiten proximalen Befestigungspunkt (E) gehalten wird,

wobei das längliche nachgiebige proximale Element (160) einen undehnbaren Abschnitt (161) und eine Feder (162) aufweist, die in Reihe miteinander verbunden sind, wobei der undehnbare Abschnitt (161) angeordnet ist, um so um die erste Umlenkrolle (141), um die zweite Umlenkrolle (142) und um die vierte Umlenkrolle (144) gewickelt zu werden, dass die Aktion des länglichen nachgiebigen proximalen Elements (160) dieselbe ist wie die Aktion einer idealen Feder, d.h. einer Feder mit einer Restlänge Null, wobei ein Ende mit dem festen Punkt (A) und mit dem ersten Ausgleichspunkt (B) verbunden ist, wobei die ideale Feder insbesondere eine Steifigkeit (k) hat, derart, dass $k = 4 \cdot k_1$.

wobei die Mehrzahl der Führungselemente (141- 150) ebenfalls aufweist:

- eine fünfte Umlenkrolle (145), die mit der Möglichkeit einer Drehung in Bezug auf den Schlitten (111), um eine Achse (p) drehbar angebracht ist, die durch den einen proximalen Wicklungspunkt (C) des Schlittens (111) und orthogonal zu der Ebene (Π) verläuft;

wobei der undehnbare Abschnitt (161) angeordnet ist, um ebenfalls um die fünfte Umlenkrolle (145) gewickelt zu werden.

6. Robotvorrichtung (100) nach Anspruch 1, wobei das Anpassungsmittel (112, 112', 113, 113', 114) eine Stellschraube (113) aufweist, die angeordnet ist, um durch den Stellantrieb (112) in Drehung versetzt zu werden, um den Schlitten (111) entlang der proximalen Achse (125) in Bewegung zu setzen.

7. Robotvorrichtung (100) nach einem der vorhergehenden Ansprüche, wobei die Robotvorrichtung (100) ebenfalls aufweist:

- einen distalen Arm (130), der schwenkbar mit dem proximalen Arm (120) an dem Belastungsangriffspunkt (O') verbunden ist, wobei der distale Arm (130) einen zweiten Belastungsangriffspunkt (O") aufweist, der in einem vorbestimmten Abstand $(l_2)$ von dem Belastungsangriffspunkt (O') entlang einer distalen Achse (135) angeordnet ist, wobei die distale Achse (135) eine vorbestimmte Richtung (z) hat und zum Ausführen einer zweiten Drehung mit einer vorbestimmten Amplitude $(\theta_2)$ angeordnet ist, wobei die zweite Drehung mit einer vorbestimmten Amplitude $(\theta_2)$ in einer Ebene liegt, die parallel zu der Ebene (Π) verläuft, wobei die zweite vorbestimmte Amplitude $(\theta_2)$ Null ist, wenn sich die vorbestimmte Richtung (z) mit der vorbestimmten Richtung (y) deckt;
- ein Ausgleichshebel (171), der schwenkbar mit dem Rahmen (110) an dem Gelenkpunkt (O) verbunden ist, wobei der Ausgleichshebel (171) einen zweiten Ausgleichspunkt (B') hat und eine Ausgleichsachse (175) mit einer vorbestimmten Richtung (w) hat, wobei die Ausgleichsachse (175) durch den Gelenkpunkt (O) und durch den zweiten Ausgleichspunkt (B') verläuft, wobei der zweite Ausgleichspunkt (B') in einem vorbestimmten Abstand $(b_2)$ von dem Gelenkpunkt (O) angeordnet ist;
- einen Übersetzungsmechanismus (170), angeordnet, um den Ausgleichshebel (171) derart zu betätigen, dass die Ausgleichsachse (175) eine Drehung mit einer Amplitude $\theta_2$ in Bezug auf die proximale Achse (125) ausführen kann;
- ein längliches nachgiebiges distales Element (165) mit einer vorbestimmten Steifigkeit $(k_2)$, das an dem proximalen Arm (120) an dem Rahmen (110) und an dem Ausgleichshebel (171) gehalten wird, um ein Interaktionsmoment $(M_{in2})$ in Bezug auf den Belastungsangriffspunkt (O') zu erzeugen, wobei das Interaktionsmoment $(M_{in2})$ auf den distalen Arm (130) wirkt und so ausgelegt ist, dass eine Interaktionskraft $(F_{in2})$ an dem distalen Arm (130) parallel zu der Richtung (y) erzeugt wird und an den zweiten Belastungsangriffspunkt (O") angelegt wird, wobei die Interaktionskraft $(F_{in2})$ mit dem Interaktionsmoment $(M_{in2})$ gemäß der Gleichung $F_{in2} \cdot l_2 \cdot \sin(\theta_2) = M_{in2}$ in Beziehung steht;

8. Robotvorrichtung (100) nach Anspruch 7, wobei das Interaktionsmoment $(M_{in2})$ mit dem Ausgleichsabstand $(b_1)$

gemäß der Gleichung $k_2 * b_2 * b_1 * \sin(\theta_2) = M_{in2}$ derart in Beziehung steht, dass die Interaktionskraft ($F_{in2}$) mit dem Ausgleichsabstand ($b_1$) gemäß der Gleichung $F_{in2} = (k_2 * b_2 * b_1)/l_2$ für jeden Wert $\theta_2$ in Beziehung steht.

9. Robotvorrichtung (100) nach Anspruch 5, wobei die Mehrzahl von Führungselementen (141-150) aufweist:

   - eine sechste Umlenkrolle (146) mit einem vorbestimmten Rillenradius (R), wobei die sechste Umlenkrolle (146) mit der Möglichkeit einer Drehung in Bezug auf den Rahmen (110) um eine Achse (u) drehbar angebracht ist, die durch den zweiten Ausgleichspunkt (B') und orthogonal zu der Ebene ($\Pi$) verläuft;
   - eine siebte Umlenkrolle (147) mit dem vorbestimmten Rillenradius (R), wobei die siebte Umlenkrolle (147) ohne Möglichkeit einer Drehung in Bezug auf den Ausgleichshebel (171), um eine Achse (s) drehbar angebracht ist, die durch den ersten Ausgleichspunkt (B) und orthogonal zu der Ebene ($\Pi$) verläuft;
   - eine achte Umlenkrolle (148) mit dem vorbestimmten Rillenradius (R), wobei die achte Umlenkrolle (148) mit der Möglichkeit einer Drehung in Bezug auf den Rahmen (110) um eine Achse (t) drehbar angebracht ist, die durch den Gelenkpunkt (O) und orthogonal zu der Ebene ($\Pi$) verläuft;

   wobei das längliche nachgiebige proximale Element (165) ein erstes Ende (165a) hat, das an der siebten Umlenkrolle (147) an der Rille gehalten wird, und ein zweites Ende (160b), das an dem proximalen Arm (120) an einem ersten proximalen Befestigungspunkt (OF) gehalten wird,
   wobei das längliche nachgiebige distale Element (165) einen undehnbaren Abschnitt (166) und eine Feder (167) aufweist, die in Reihe miteinander verbunden sind, wobei der undehnbare Abschnitt (166) angeordnet ist, um so um die sechste Umlenkrolle (146), um die siebte Umlenkrolle (147) und um die achte Umlenkrolle (148) gewickelt zu werden, dass die Aktion des länglichen nachgiebigen proximalen Elements (165) dieselbe ist wie die Aktion einer idealen Feder, d.h. einer Feder mit einer Restlänge Null, wobei ein Ende mit dem zweiten Ausgleichspunkt (B') und mit dem ersten Ausgleichspunkt (B) verbunden ist.

10. Robotvorrichtung (100) nach Anspruch 5, wobei die Mehrzahl von Führungselementen (141-150) aufweist:

    - eine sechste Umlenkrolle (146) mit einem vorbestimmten Rillenradius (R), wobei die sechste Umlenkrolle (146) mit der Möglichkeit einer Drehung in Bezug auf den Ausgleichshebel (171) um eine Achse (u) drehbar angebracht ist, die durch den zweiten Ausgleichspunkt (B') und orthogonal zu der Ebene ($\Pi$) verläuft;
    - eine siebte Umlenkrolle (147) mit dem vorbestimmten Rillenradius (R), wobei die siebte Umlenkrolle (147) ohne Möglichkeit einer Drehung in Bezug auf den Schlitten (111) um eine Achse (s) drehbar angebracht ist, die durch den ersten Ausgleichspunkt (B) und orthogonal zu der Ebene ($\Pi$) verläuft;
    - eine neunte Umlenkrolle (149) mit dem vorbestimmten Rillenradius (R), wobei die neunte Umlenkrolle (149) mit der Möglichkeit einer Drehung in Bezug auf den Schlitten (111), um eine Achse (s) drehbar angebracht ist, die durch den ersten Ausgleichspunkt (B) des Schlittens (111) und orthogonal zu der Ebene ($\Pi$) verläuft;

    wobei das längliche nachgiebige distale Element (165) ein erstes Ende (165a) hat, das an der siebten Umlenkrolle (147) an der Rille gehalten wird, und ein zweites Ende (165b), das an dem Schlitten (111) an einem zweiten distalen Befestigungspunkt (E') gehalten wird, wobei das längliche nachgiebige proximale Element (165) einen undehnbaren Abschnitt (166) und eine Feder (167) aufweist, die in Reihe miteinander verbunden sind, wobei der undehnbare Abschnitt (166) angeordnet ist, um so um die sechste Umlenkrolle (146), um die siebte Umlenkrolle (147) und um die neunte Umlenkrolle (149) gewickelt zu werden, dass die Aktion des länglichen nachgiebigen distalen Elements (165) dieselbe ist wie die Aktion einer idealen Feder, d.h. einer Feder mit einer Restlänge Null, wobei ein Ende mit dem zweiten Ausgleichspunkt (B') und mit dem ersten Ausgleichspunkt (B) verbunden ist, wobei die ideale Feder insbesondere eine Steifigkeit (k) hat, derart, dass $k = 4 * k_2$.
    wobei insbesondere die Mehrzahl der Führungselemente (141-150) ebenfalls aufweist:

    - eine zehnte Umlenkrolle (150), die mit der Möglichkeit einer Drehung in Bezug auf den Schlitten (111) um eine Achse (q) drehbar angebracht ist, die durch einen distalen Wicklungspunkt (C') des Schlittens (111) verläuft und orthogonal zu der Ebene ($\Pi$) ist; wobei der undehnbare Abschnitt (161) angeordnet ist, um ebenfalls um die zehnte Umlenkrolle (150) gewickelt zu werden.

11. Robotvorrichtung (100) nach einem der Ansprüche 8 bis 10, wobei der Übersetzungsmechanismus (170) aufweist:

    - ein Gelenkviereck (172), angeordnet, um stromaufwärts des proximalen Arms (120) eine Information zu übertragen, die eine Winkelamplitude ($\delta$) betrifft, die auf die Winkelamplitude ($\theta_2$) reagiert;
    - einen Decodiermechanismus (173), angeordnet, um die Information zu empfangen, die die Winkelamplitude

($\delta$) betrifft, und um den Ausgleichshebel (171) derart zu betätigen, dass die Ausgleichsachse (175) eine Drehung mit einer Amplitude $\theta_2$ in Bezug auf die proximale Achse (125) ausführen kann.

12. Robotvorrichtung (100) nach Anspruch 8, wobei das Schlittenmittel (111, 111') auch einen Hilfsschlitten (111') aufweist, wobei der Hilfsschlitten (111') gleitend auf dem proximalen Arm (120) angeordnet ist und einen dritten Ausgleichspunkt (B'') hat, der auf der proximalen Achse (125) angeordnet ist, wobei der dritte Ausgleichspunkt (B'') in einem vorbestimmten zweiten Ausgleichsabstand ($a_2$) von dem Gelenkpunkt (O) angeordnet ist, wobei der Hilfsschlitten (111') so angeordnet ist, dass er sich entlang der proximalen Achse (125) bewegt, um den zweiten Ausgleichsabstand ($a_2$) anzupassen;
und wobei das Anpassungsmittel (112, 112', 113, 113', 114) ebenfalls aufweist:

- einen Hilfsstellantrieb (112'), insbesondere einen Motor, der mit dem proximalen Arm (120), fest verbunden ist, angeordnet, um den Hilfsschlitten (111') in Bewegung zu setzen, um den Ausgleichsabstand ($a_2$) anzupassen;
- eine Hilfseinstellschraube (113'), die angeordnet ist, um durch den Hilfsstellantrieb (112') in Drehung versetzt zu werden, um den Hilfsschlitten (111') entlang der proximalen Achse (125) in Bewegung zu setzen;

wobei das Interaktionsmoment ($M_{in2}$) das mit dem zweiten Ausgleichsabstand ($a_2$) gemäß der Gleichung $k_2 {}^* b_2 {}^* a_2 {}^* \sin(\theta_2) = M_{in2}$ derart in Beziehung steht, dass die Interaktionskraft ($F_{in2}$) mit dem zweiten Ausgleichsabstand ($a_2$) gemäß der Gleichung $F_{in2} = (k_2 {}^* b_2 {}^* a_2) / l_2$ für jeden Wert $\theta_2$ in Beziehung steht.

13. Robotvorrichtung (100) nach Anspruch 12, wobei:

- mindestens eine Einstellschraube von der Einstellschraube (113) und der Hilfseinstellschraube (113') ein Kugelgewindetrieb mit einer Drehachse (v) parallel zu der Richtung (x) ist, wobei der Kugelgewindetrieb einen inneren Kern (113a) und eine Mutter (113b) aufweist, wobei der innere Kern (113a) mit dem Schlittenmittel (111, 111') fest verbunden ist und angeordnet ist, um entlang der Drehachse (v) infolge einer Drehung der Mutter (113b) um die Drehachse (v) eine Übersetzung vorzunehmen;
- mindestens ein Stellantrieb von dem Stellantrieb (112) und dem Hilfsstellantrieb (112') einen Stator (112a), der mit dem proximalen Arm (120) fest verbunden ist, und einen Rotor (112b) aufweist, der mit der Mutter (113b) fest verbunden ist und angeordnet ist, um sich um die Drehachse (v) zu drehen, wodurch auch die Mutter (113b) in Drehung versetzt wird;

derart, dass eine Drehung des Rotors (112b) um die Drehachse (v) eine Übersetzung des inneren Kerns (113a) entlang der Drehachse (v) verursacht und damit eine Übersetzung des Schlittenmittels (111, 111') entlang der proximalen Achse (125).

14. Robotvorrichtung (100) nach Anspruch 12, wobei mindestens ein Stellantrieb von dem Stellantrieb (112) und dem Hilfsstellantrieb (112') eine elektromechanische Bremse (112c) aufweist, die angeordnet ist, um sich aus einer arretierten Konfiguration, in der die elektromechanische Bremse (112c) keine Energie erhält, und der Stellantrieb (112) und/oder der Hilfsstellantrieb (112') das Schlittenmittel (111, 111') nicht betätigen können, in eine nicht arretierte Konfiguration zu bewegen, in der die elektromechanische Bremse (112c) Energie erhält und der Stellantrieb (112) und/oder der Hilfsstellantrieb (112') sich drehen können, wodurch die Stellschraube (113) und/oder die Hilfsstellschraube (113') des Anpassungsmittels (112, 112', 113, 113', 114) bewegt werden.

15. Exoskelettstruktur (200) zur Unterstützung eines Umgangs mit mindestens einer menschlichen Extremität, wobei die Exoskelettstruktur (200) **dadurch gekennzeichnet ist, dass** sie mindestens eine Robotvorrichtung (100) zur Unterstützung der menschlichen Kraft nach einem der Ansprüche 1 bis 14 aufweist.

**Revendications**

1. Dispositif robotique (100) destiné à produire des forces pour aider, ou pour résister, au mouvement du corps humain, ledit dispositif robotique comprenant :

- un cadre (110) comportant un point fixe (A) et un point d'articulation (O), faisant partie intégrante dudit cadre (110), ledit point fixe (A) étant agencé à une distance prédéfinie ($a_1$) dudit point d'articulation (O) ;
- un bras proximal (120), raccordé pivotant audit cadre (110) au niveau dudit point d'articulation (O), ledit bras proximal (120) comportant un point de chargement (O') agencé à une distance prédéfinie ($l_1$) dudit point d'articulation (O) le long d'un axe proximal (125), ledit axe proximal (125) présentant une direction prédéfinie (x) et étant agencé pour tourner selon une première rotation d'amplitude prédéfinie ($\theta_1$), ladite première rotation d'une amplitude prédéfinie ($\theta_1$) se trouvant dans un plan ($\pi$) contenant ledit point fixe (A) et ledit axe proximal (125), ladite première amplitude prédéfinie ($\theta1$) étant égale à zéro lorsque ladite direction prédéfinie (x) coïncide avec une direction prédéfinie (y) passant par ledit point fixe (A) et par ledit point d'articulation (O) ;

- un élément proximal élastique allongé (160) qui présente une rigidité prédéfinie ($k_1$), solidarisé audit bras proximal (120) et audit cadre (110), afin de générer un moment d'interaction ($M_{in1}$) par rapport audit point d'articulation (O), ledit moment d'interaction ($M_{in1}$) agissant sur ledit bras proximal (120) et étant configuré pour produire une force d'interaction ($F_{in1}$) sur ledit bras proximal (120) parallèle à ladite direction (y) et appliquée audit point de chargement (O'), ladite force d'interaction ($F_{in1}$) étant corrélée audit moment d'interaction ($M_{in1}$) selon l'équation $F_{in1}*l_1*\sin(\theta_1) = M_{in1}$ ;

**caractérisé en ce qu'il** comprend également :

- un moyen formant chariot (111, 111') comprenant un chariot (111), ledit chariot (111) étant agencé de manière à pouvoir coulisser sur ledit bras proximal (120) et présentant un premier point d'équilibrage (B) agencé sur ledit axe proximal (125), ledit premier point d'équilibrage (B) étant agencé à une distance d'équilibrage prédéfinie ($b_1$) dudit point d'articulation (O), ledit chariot (111) étant agencé de sorte à se déplacer le long de dudit axe proximal (125) ;
- un moyen de réglage (112, 112', 113, 113', 114) agencé de sorte à actionner automatiquement ledit moyen formant chariot (111, 111') le long dudit axe proximal (125), ledit moyen de réglage (112, 112', 113, 113', 114) étant configuré afin de régler ladite distance d'équilibrage ($b_1$) ;

**en ce que** ledit moment d'interaction ($M_{in1}$) est corrélé à ladite distance d'équilibrage ($b_1$) selon l'équation $k_1*a_1*b_1*\sin(\theta_1) = M_{in1}$, de telle façon que ladite force d'interaction ($F_{in1}$) est corrélée à ladite distance d'équilibrage ($b_1$) selon l'équation $F_{in1} = (k_1*a_1*b_1)/l_1$, pour toute valeur de $\theta_1$ ;
**en ce que** ledit moyen de réglage (112, 112', 113, 113', 114) comprend

- un actionneur (112), en particulier un moteur, faisant partie intégrante dudit bras proximal (120), agencé de sorte à actionner ledit chariot (111) pour régler ladite distance d'équilibrage ($b_1$) ;
- une unité de commande (114) agencée de sorte à recevoir les données d'entrée, à analyser lesdites données d'entrée et à faire fonctionner ledit actionneur (112) pour régler ladite distance d'équilibrage ($b_1$) sur la base des données d'entrée.

2. Dispositif robotique (100) selon la revendication 1, ledit élément proximal élastique allongé (160) étant solidarisé à une pluralité d'éléments de guidage (141 à 150) configurés pour guider ledit élément proximal élastique allongé (160) selon un trajet prédéfini.

3. Dispositif robotique (100) selon la revendication 2, au moins un élément de guidage (141 à 150) de ladite pluralité étant une poulie (141 à 150) dotée d'une rainure et articulée autour d'un axe de rotation sensiblement orthogonal audit plan ($\pi$), ledit élément proximal élastique allongé (160) étant solidarisé dans ladite rainure.

4. Dispositif robotique (100) selon la revendication 2, ladite pluralité d'éléments de guidage (141 à 150) comprenant :

- une première poulie (141) possédant un rayon de rainure prédéfini (R), ladite première poulie (141) étant articulée, avec possibilité de rotation par rapport audit cadre (110), autour d'un axe (r) passant par ledit point fixe (A) et orthogonal audit plan ($\pi$) ;
- une deuxième poulie (142) possédant ledit rayon de rainure prédéfini (R), ladite deuxième poulie (142) étant articulée, sans possibilité de rotation par rapport audit chariot (111), autour d'un axe (s) passant par ledit premier point d'équilibrage (B) et orthogonal audit plan ($\pi$) ;
- une troisième poulie (143) possédant ledit rayon de rainure prédéfini (R), ladite troisième poulie (143) étant articulée, avec possibilité de rotation par rapport audit cadre (110), autour d'un axe (t) passant par ledit point d'articulation (O) et orthogonal audit plan ($\pi$) ;

ledit élément proximal élastique allongé (160) comportant une première extrémité (160a) solidarisée à ladite deuxième poulie (142) au niveau de la rainure et une seconde extrémité (160b) solidarisée audit bras proximal (120) au niveau d'un premier point de fixation proximal (D),

ledit élément proximal élastique allongé (160) comprenant une partie inextensible (161) et un ressort (162), raccordés l'un à l'autre en série, ladite partie inextensible (161) étant agencée de sorte à s'enrouler autour de ladite première poulie (141), autour de ladite deuxième poulie (142) et autour de ladite troisième poulie (143), de telle façon que l'action dudit élément proximal élastique allongé (160) est la même que l'action d'un ressort idéal, c'est à dire celle d'un ressort qui possède une longueur au repos nulle, qui possède une extrémité raccordée audit point fixe (A) et audit premier point d'équilibrage (B).

5. Dispositif robotique (100) selon la revendication 4, ladite pluralité d'éléments de guidage (141 à 150) comprenant également :

- une première poulie (141) possédant un rayon de rainure prédéfini (R), ladite première poulie (141) étant articulée, avec possibilité de rotation par rapport audit cadre (110), autour d'un axe (r) passant par ledit point fixe (A) et orthogonal audit plan $(\pi)$ ;
- une deuxième poulie (142) possédant ledit rayon de rainure prédéfini (R), ladite deuxième poulie (142) étant articulée, sans possibilité de rotation par rapport audit chariot (111), autour d'un axe (s) passant par ledit premier point d'équilibrage (B) et orthogonal audit plan $(\pi)$ ;
- une quatrième poulie (144) possédant ledit rayon de rainure prédéfini (R), ladite quatrième poulie (144) étant articulée, avec possibilité de rotation par rapport audit chariot (111), autour d'un axe (s) passant par ledit premier point d'équilibrage (B) dudit chariot (111) et orthogonal audit plan $(\pi)$ ;

ledit élément proximal élastique allongé (160) comportant une première extrémité (160a) solidarisée à ladite deuxième poulie (142) au niveau de ladite rainure et une seconde extrémité (160b) solidarisée audit chariot (111) au niveau d'un second point de fixation proximal (E),
ledit élément proximal élastique allongé (160) comprenant une partie inextensible (161) et un ressort (162), raccordés l'un à l'autre en série, ladite partie inextensible (161) étant agencée pour s'enrouler autour de ladite première poulie (141), autour de ladite deuxième poulie (142) et autour de ladite quatrième poulie (144), de telle façon que l'action dudit élément proximal élastique allongé (160) est la même que l'action d'un ressort idéal, c'est à dire d'un ressort qui possède une longueur au repos nulle, qui possède une extrémité raccordée audit point fixe (A) et audit premier point d'équilibrage (B), en particulier ledit ressort idéal possédant une rigidité (k) de sorte que $k = 4 \cdot k_1$.
en particulier ladite pluralité d'éléments de guidage (141 à 150) comprenant également :

- une cinquième poulie (145) articulée, avec possibilité de rotation par rapport audit chariot (111), autour d'un axe (p) passant par un point d'enroulement proximal (C) dudit chariot (111) et orthogonal audit plan $(\pi)$ ;

ladite partie inextensible (161) étant agencée de sorte à s'enrouler autour de ladite cinquième poulie (145) également.

6. Dispositif robotique (100) selon la revendication 1, ledit moyen de réglage (112, 112', 113, 113', 114) comprenant une vis de réglage (113) agencée de sorte à être entraînée en rotation par ledit actionneur (112) pour actionner ledit chariot (111) le long dudit axe proximal (125).

7. Dispositif robotique (100) selon l'une quelconque des revendications précédentes, ledit dispositif robotique (100) comprenant également :

- un bras distal (130) raccordé pivotant audit bras proximal (120) au niveau dudit point de chargement (O'), ledit bras distal (130) comportant un second point de chargement (O'') agencé à une distance prédéfinie $(l_2)$ dudit point de chargement (O') le long d'un axe distal (135), ledit axe distal (135) présentant une direction prédéfinie (z) et étant agencé pour effectuer une seconde rotation selon une amplitude prédéfinie $(\theta_2)$, ladite seconde rotation d'une amplitude prédéfinie $(\theta_2)$ se trouvant dans un plan parallèle audit plan $(\pi)$, ladite seconde amplitude prédéfinie $(\theta_2)$ étant égale à zéro lorsque ladite direction prédéfinie (z) coïncide avec ladite direction prédéfinie (y) ;
- un levier d'équilibrage (171) raccordé pivotant audit cadre (110) au niveau dudit point d'articulation (O), ledit levier d'équilibrage (171) comportant un deuxième point d'équilibrage (B') et possédant un axe d'équilibrage (175) doté d'une direction prédéfinie (w), ledit axe d'équilibrage (175) passant par ledit point d'articulation (O) et par ledit deuxième point d'équilibrage (B'), ledit deuxième point d'équilibrage (B') étant agencé à une distance prédéfinie $(b_2)$ dudit point d'articulation (O) ;
- un mécanisme de transmission (170) agencé de sorte à actionner ledit levier d'équilibrage (171) de telle façon que ledit axe d'équilibrage (175) peut effectuer une rotation d'amplitude $\theta_2$ par rapport audit axe proximal (125) ;
- un élément distal élastique allongé (165) qui possède une rigidité prédéfinie $(k_2)$, solidarisé audit bras proximal (120), audit cadre (110) et audit levier d'équilibrage (171), afin de générer un moment d'interaction ($M_{in2}$) par rapport audit point de chargement (O'), ledit moment d'interaction ($M_{in2}$) agissant sur ledit bras distal (130) et étant configuré pour générer une force d'interaction ($F_{in2}$) sur ledit bras distal (130) parallèle à ladite direction (y) et appliquée audit second point de chargement (O"), ladite force d'interaction ($F_{in2}$) étant corrélée audit moment d'interaction ($M_{in2}$) selon l'équation $F_{in2}*l_2*\sin(\theta_2) = M_{in2}$.

8. Dispositif robotique (100), selon la revendication 7, ledit moment d'interaction ($M_{in2}$) étant corrélé à ladite distance d'équilibrage ($b_1$) selon l'équation $k_2*b_2*b_1*\sin(\theta_2) = M_{in2}$, de telle façon que ladite force d'interaction ($F_{in2}$) est corrélée à ladite distance d'équilibrage ($b_1$) selon l'équation $F_{in2} = (k_2*b_2*b_1)/l_2$ pour toute valeur de $\theta_2$.

9. Dispositif robotique (100) selon la revendication 5, ladite pluralité d'éléments de guidage (141 à 150) comprenant :

   - une sixième poulie (146) possédant un rayon de rainure prédéfini (R), ladite sixième poulie (146) étant articulée, avec possibilité de rotation par rapport audit cadre (110), autour d'un axe (u) passant par ledit deuxième point d'équilibrage (B') et orthogonal audit plan ($\pi$) ;
   - une septième poulie (147) possédant ledit rayon de rainure prédéfini (R), ladite septième poulie (147) étant articulée, sans possibilité de rotation par rapport audit levier d'équilibrage (171), autour d'un axe (s) passant par ledit premier point d'équilibrage (B) et orthogonal audit plan ($\pi$) ;
   - une huitième poulie (148) possédant un rayon de rainure prédéfini (R), ladite huitième poulie (148) étant articulée, avec possibilité de rotation par rapport audit cadre (110), autour d'un axe (t) passant par ledit point d'articulation (O) et orthogonal audit plan ($\pi$) ;

   ledit élément distal élastique allongé (165) possédant une première extrémité (165a) solidarisée à ladite septième poulie (147) au niveau de ladite rainure et une seconde extrémité (160b) solidarisée audit bras proximal (120) au niveau d'un premier point de fixation distal (OF),
   ledit élément distal élastique allongé (165) comprenant une partie inextensible (166) et un ressort(167), raccordés l'un à l'autre en série, ladite partie inextensible (166) étant agencée de sorte à s'enrouler autour de ladite sixième poulie (146), autour de ladite septième poulie (147) et autour de ladite huitième poulie (148), de telle façon que l'action dudit élément distal élastique allongé (165) est la même que l'action d'un ressort idéal, c'est à dire d'un ressort qui possède une longueur au repos nulle, qui comporte une extrémité raccordée audit deuxième point d'équilibrage (B') et audit premier point d'équilibrage (B).

10. Dispositif robotique (100) selon la revendication 5, ladite pluralité d'éléments de guidage (141 à 150) comprenant :

   - une sixième poulie (146) possédant un rayon de rainure prédéfini (R), ladite sixième poulie (146) étant articulée, avec possibilité de rotation par rapport audit levier d'équilibrage (171), autour d'un axe (u) passant par ledit deuxième point d'équilibrage (B') et orthogonal audit plan ($\pi$) ;
   - une septième poulie (147) possédant ledit rayon prédéfini (R), ladite septième poulie (147) étant articulée, sans possibilité de rotation par rapport audit chariot (111), autour d'un axe (s) passant par ledit premier point d'équilibrage (B) et orthogonal audit plan ($\pi$) ;
   - une neuvième poulie (149) possédant ledit rayon de rainure prédéfini (R), ladite neuvième poulie (149) étant articulée, avec possibilité de rotation par rapport audit chariot (111), autour d'un axe (s) passant par ledit premier point d'équilibrage (B) dudit chariot (111) et orthogonal audit plan ($\pi$) ;

   ledit élément distal élastique allongé (165) possédant une première extrémité (165a) solidarisée à ladite septième poulie (147) au niveau de ladite rainure et une seconde extrémité (165b) solidarisée audit chariot (111) au niveau d'un second point de fixation distal (E'),
   ledit élément proximal élastique allongé (165) comprenant une partie inextensible (166) et un ressort (167), raccordés l'un à l'autre en série, ladite partie inextensible (166) étant agencée de sorte à s'enrouler autour de ladite sixième poulie (146), autour de ladite septième poulie (147) et autour de ladite neuvième poulie (149), de telle façon que l'action dudit élément distal élastique allongé (165) est la même que l'action d'un ressort idéal, c'est à dire d'un ressort qui possède une longueur au repos nulle, qui comporte une extrémité raccordée audit deuxième point d'équilibrage (B') et audit premier point d'équilibrage (B), en particulier ledit ressort idéal possédant une rigidité (k) telle que $k = 4*k_2$ ;
   en particulier ladite pluralité d'éléments de guidage (141 à 150) comprenant également :

   - une dixième poulie (150) articulée, avec possibilité de rotation par rapport audit chariot (111), autour d'un axe (q) qui passe par un point d'enroulement distal (C') dudit chariot (111) et qui est orthogonal audit plan ($\pi$) ;

ladite partie inextensible (161) étant agencée de sorte à s'enrouler également autour de ladite dixième poulie (150).

11. Dispositif robotique (100) selon l'une quelconque des revendications 8 à 10, ledit mécanisme de transmission (170) comprenant :

- une liaison à quatre barres (172) agencée de sorte à transmettre, en amont dudit bras proximal (120), une information concernant une amplitude angulaire ($\delta$) répondant à ladite amplitude angulaire ($\theta_2$) ;
- un mécanisme de décodage (173) agencé de sorte à recevoir ladite information concernant ladite amplitude angulaire ($\delta$), et à actionner ledit levier d'équilibrage (171) de telle façon que ledit axe d'équilibrage (175) peut effectuer une rotation d'amplitude $\theta_2$ par rapport audit axe proximal (125).

12. Dispositif robotique (100) selon la revendication 8, ledit moyen formant chariot (111, 111') comprenant également un chariot auxiliaire (111'), ledit chariot auxiliaire (111') étant raccordé de manière coulissante au bras proximal (120) et comportant un troisième point d'équilibrage (B") agencé sur ledit axe proximal (125), ledit troisième point d'équilibrage (B") étant situé à une seconde distance d'équilibrage prédéfinie ($a_2$) dudit point d'articulation (O), ledit chariot auxiliaire (111') étant agencé de sorte à se déplacer le long dudit axe proximal (125), afin de régler ladite seconde distance d'équilibrage ($a_2$) ;
et ledit moyen de réglage (112, 112', 113, 113', 114) comprenant également :

- un actionneur auxiliaire (112'), en particulier un moteur, faisant partie intégrante dudit bras proximal (120), agencé de sorte à actionner ledit chariot auxiliaire (111') pour régler ladite seconde distance d'équilibrage ($a_2$) ;
- une vis de réglage auxiliaire (113') agencée de sorte à être mise en rotation par ledit actionneur auxiliaire (112') pour actionner ledit chariot auxiliaire (111') le long dudit axe proximal (125) ;

ledit moment d'interaction ($M_{in2}$) étant corrélé à ladite seconde distance d'équilibrage ($a_2$) selon l'équation $k_2 * b_2 * a_2 * \sin(\theta_2) = M_{in2}$, afin que ladite force d'interaction ($F_{in2}$) soit corrélée à ladite seconde distance d'équilibrage ($a_2$) selon l'équation $F_{in2} = (k_2 * b_2 * a_2)/l_2$ pour toute valeur de $\theta_2$.

13. Dispositif robotique (100) selon la revendication 12 :

- au moins une vis de réglage parmi ladite vis de réglage (113) et ladite vis de réglage auxiliaire (113') étant une vis à billes comportant un axe de rotation (v) parallèle à ladite direction (x), ladite vis à billes comprenant un coeur interne (113a) et un écrou (113b), ledit coeur interne (113 a) faisant partie intégrante dudit moyen formant chariot (111, 111') et étant agencé de sorte à se translater le long dudit axe de rotation (v), du fait d'une rotation dudit écrou (113b) autour dudit axe de rotation (v) ;
- au moins un actionneur parmi ledit actionneur (112) et ledit actionneur auxiliaire (112') comprenant un stator (112a), faisant partie intégrante dudit bras proximal (120), et un rotor (112b), faisant partie intégrante dudit écrou (113b) et agencé de sorte à tourner autour dudit axe de rotation (v), mettant en rotation également ledit écrou (113b) ;

de telle façon qu'une rotation dudit rotor (112b) autour dudit axe de rotation (v) entraîne une translation dudit coeur interne (113a) le long dudit axe de rotation (v) et par conséquent une translation dudit moyen formant chariot (111, 111') le long dudit axe proximal (125).

14. Dispositif robotique (100) selon la revendication 12, au moins un actionneur parmi ledit actionneur (112) et ledit actionneur auxiliaire (112') comprenant un frein électromécanique (112c) qui est agencé de sorte à passer d'une configuration verrouillée, dans laquelle ledit frein électromécanique (112c) n'est pas alimenté et ledit actionneur (112), et/ou, ledit actionneur auxiliaire (112'), ne peuvent pas actionner ledit moyen formant chariot (111, 111'), à une configuration déverrouillée, dans laquelle ledit frein électromécanique (112c) est alimenté et ledit actionneur (112) et/ou ledit actionneur auxiliaire (112') peuvent tourner, déplaçant ainsi ladite vis de réglage (113), et/ou ladite vis de réglage auxiliaire (113'), desdits moyens de réglage (112, 112', 113, 113', 114).

15. Structure d'exosquelette (200) destinée à aider à la manipulation d'au moins un membre humain, ladite structure exosquelette (200) **étant caractérisée en ce qu'**elle comprend au moins un dispositif robotique (100) pour aider la force humaine selon l'une quelconque des revendications 1 à 14.

**Fig. 1A**

# Fig. 1B

# Fig. 1C

Fig. 2

EP 2 948 276 B1

**Fig. 3**

**Fig. 3A**

**Fig. 4**

**Fig. 5**

**Fig. 6**

**Fig. 6A**

**Fig. 7**

**Fig. 8**

EP 2 948 276 B1

**Fig. 9**

EP 2 948 276 B1

# Fig. 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 102088933
- FR 2541574 A1
- WO 2012042416 A2
- US 8152699 B1

**Non-patent literature cited in the description**

- **R BARENTS ; M SCHENK ; WD VAN DORSSER ; BM WISSE ; JL HERDER.** Spring-to-Spring Balancing as Energy-Free Adjustment Method in Gravity Equilibrators. *ASME Journal of Mechanical Design,* 2011, vol. 133 (6), 061010